(19) Europäisches Patentamt
European Patent Office
Office européen des brevets

(11) EP 2 993 677 A1

(12) EUROPEAN PATENT APPLICATION
published in accordance with Art. 153(4) EPC

(43) Date of publication:
09.03.2016 Bulletin 2016/10

(51) Int Cl.:
H01F 38/14 (2006.01)    H02J 7/00 (2006.01)

(21) Application number: 14785849.2

(22) Date of filing: 30.01.2014

(86) International application number:
PCT/JP2014/052067

(87) International publication number:
WO 2014/171163 (23.10.2014 Gazette 2014/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 16.04.2013 JP 2013085784

(71) Applicant: Nitto Denko Corporation
Ibaraki-shi, Osaka 567-8680 (JP)

(72) Inventors:
• HATANAKA, Takezo
Ibaraki-shi
Osaka 567-8680 (JP)
• TSUDA, Hisashi
Ibaraki-shi
Osaka 567-8680 (JP)

(74) Representative: Müller-Boré & Partner
Patentanwälte PartG mbB
Friedenheimer Brücke 21
80639 München (DE)

(54) WIRELESS POWER TRANSMISSION DEVICE, HEAT GENERATION CONTROL METHOD FOR WIRELESS POWER TRANSMISSION DEVICE, AND PRODUCTION METHOD FOR WIRELESS POWER TRANSMISSION DEVICE

(57)    The invention relates to a thermal control method for a wireless power transmission apparatus 1 configured to supply power, by changing a magnetic field, from a power-supplying module 2 to a power-receiving module 3 connected to a power-supplied device 10 including a lithium ion secondary battery 9 rechargeable using a constant current/constant voltage charging system. Heat generation in the wireless power transmission apparatus is controlled by adjusting a load change characteristic, which is represented by an amount of change in a value of input impedance Zin of the wireless power transmission apparatus 1 for a predetermined period of charging time in constant voltage charging, by adjusting a value of a coupling coefficient between coils each included in the power-supplying module 2 or the power-receiving module 3.

FIG.1

$$I_{in} = V_{in} / Z_{in}$$

EP 2 993 677 A1

## Description

[Technical Field]

The present invention relates to: a wireless power transmission apparatus in which heat generation is controllable; a thermal control method for the wireless power transmission apparatus; and a manufacturing method for the wireless power transmission apparatus.

[Background Art]

Portable electronic devices such as laptop PCs, tablet PCs, digital cameras, mobile phones, portable gaming devices, earphone-type music players, wireless headsets, hearing aids, recorders, which are portable while being used by the user have rapidly increased in recent years. Many of these portable electronic devices have therein a rechargeable battery, which requires periodical charging. To facilitate the work for charging the rechargeable battery of an electronic device, there are an increasing number of devices for charging rechargeable batteries by using a power-supplying technology that performs wireless power transmission between a power-supplying device and a power-receiving device mounted in an electronic device (wireless power transmission technology performing power transmission by varying the magnetic field).

Examples of the wireless power transmission technology include a technology that performs power transmission by means of electromagnetic induction between coils (e.g. see Patent Literature 1), a technology that performs power transmission by magnetic field coupling utilizing a resonance phenomenon (magnetic field resonant state) between resonators (coils) provided to the power-supplying device and the power-receiving device (e.g. see Patent Literature 2).

Further, a constant current/constant voltage charging system has been known as a system of charging a rechargeable battery (e.g. , lithium ion secondary battery). However, when a lithium ion secondary battery is charged with the constant current/constant voltage charging system using a wireless power transmission apparatus that performs the above wireless power transmission, the load impedance value of a power-supplied device (the rechargeable battery, a stabilizer circuit, a charging circuit, and the like) including the rechargeable battery increases because the value of the current supplied to the rechargeable battery decreases when a transition from constant current charging to constant voltage charging occurs.

With this, the input impedance of the entire wireless power transmission apparatus including the power-supplied device varies. In this regard, if it is possible to increase the amount of change in input impedance value of the wireless power transmission apparatus for a predetermined period of charging time in the constant voltage charging, the amount of change in the value of the current input to the wireless power transmission apparatus for the predetermined period of charging time can be increased. This prevents excessive input of power after the transition from the constant current charging to the constant voltage charging, thereby preventing excessive heat generation in the wireless power transmission apparatus. That is, to prevent the excessive heat generation in the wireless power transmission apparatus after the transition from the constant current charging to the constant voltage charging, it is required to make it possible to adjust a load change characteristic, which is represented by an amount of change in the input impedance value of the wireless power transmission apparatus for a predetermined period of charging time in the constant voltage charging.

To make the load change characteristic adjustable, it is conceivable to provide an impedance matching box additionally.

[Citation List]

[Patent Literature]

    Patent Literature 1: Japanese Patent No. 4624768
    Patent Literature 2: Japanese Unexamined Paten Publication No. 239769/2010

[Summary of Invention]

[Technical Problem]

However, additionally providing such an impedance matching box causes an increase in the number of components, and is inconvenient in portable electronic devices for which portability, compactness, and cost-efficiency are required.

In other words, it is desirable to adjust the load change characteristic without adding another member in a wireless power transmission apparatus (power-supplying device and power-receiving device).

It is therefore an object of the present invention is to provide a thermal control method and the like which makes it possible to control heat generation in the wireless power transmission apparatus without a need of an additional device, by adjusting the load change characteristic, which is represented by an amount of change in the input impedance value of the wireless power transmission apparatus for a predetermined period of charging time after a transition from constant current charging to constant voltage charging.

[Solution to Problem]

An aspect of the present invention to solve the problem above is a thermal control method for a wireless power transmission apparatus configured to supply power, by changing a magnetic field, from a power-supplying module to a power-receiving module connected to a power-supplied device including a secondary battery rechargeable using a constant current/constant voltage charging system, the method including

adjusting a load change characteristic, which is represented by an amount of change in input impedance value of the wireless power transmission apparatus for a predetermined period of charging time in constant voltage charging, by adjusting a value of a coupling coefficient between coils each included in the power-supplying module or the power-receiving module.

With the above method, in the case where the secondary battery rechargeable using the constant current/constant voltage charging system is charged with the wireless power transmission apparatus configured to supply power by changing a magnetic field, it is possible to adjust the load change characteristic, which is represented by an amount of change in the input impedance value of the wireless power transmission apparatus for a predetermined period of charging time after a transition from the constant current charging to the constant voltage charging, by changing the value of a coupling coefficient between coils each included in the power-supplying module or the power-receiving module. As the load change characteristic is increased in this way, an amount of change in the input impedance value of the wireless power transmission apparatus for a predetermined period of charging time after the transition from the constant current charging to the constant voltage charging increases, which increases an amount of change in the value of the current input to the wireless power transmission apparatus for the predetermined period of charging time. The increase in the amount of change in the value of the current input to the wireless power transmission apparatus prevents excessive input of power after the transition from the constant current charging to the constant voltage charging, thereby preventing excessive heat generation in the wireless power transmission apparatus (the power-supplying module and the power-receiving module).

To the contrary, as the load change characteristic is decreased, an amount of change in the input impedance value of the wireless power transmission apparatus for a predetermined period of charging time after the transition from the constant current charging to the constant voltage charging decreases, which decreases an amount of change in the value of the current input to the wireless power transmission apparatus for the predetermined period of charging time. The decrease in the amount of change in the value of the current input to the wireless power transmission apparatus prevents a rapid change in temperature of the wireless power transmission apparatus (the power-supplying module and the power-receiving module) in a short time after the transition from the constant current charging to the constant voltage charging.

Another aspect of the present invention to solve the above problem is a thermal control method for a wireless power transmission apparatus, the wireless power transmission apparatus configured to supply power, by means of resonance phenomenon, from a power-supplying module having at least a power-supplying coil and a power-supplying resonator to a power-receiving module having at least a power-receiving resonator and a power-receiving coil, the power-receiving module being connected to a power-supplied device including a secondary battery rechargeable using a constant current/constant voltage charging system, the method including

adjusting a load change characteristic, which is represented by an amount of change in input impedance value of the wireless power transmission apparatus for a predetermined period of charging time in constant voltage charging, by adjusting at least one of coupling coefficients which are a coupling coefficient between the power-supplying coil and the power-supplying resonator, a coupling coefficient between the power-supplying resonator and the power-receiving resonator, and a coupling coefficient between the power-receiving resonator and the power-receiving coil.

With the above method, in the case where the secondary battery rechargeable using the constant current/constant voltage charging system is charged with the wireless power transmission apparatus configured to supply power by means of a resonance phenomenon, it is possible to adjust the load change characteristic, which is represented by an amount of change in input impedance value of the wireless power transmission apparatus for a predetermined period of charging time after the transition from the constant current charging to the constant voltage charging, by changing at least one of the coupling coefficients which are the coupling coefficient between the power-supplying coil and the power-supplying resonator, the coupling coefficient between the power-supplying resonator and the power-receiving resonator, and the coupling coefficient between the power-receiving resonator and the power-receiving coil.

As the load change characteristic is increased in this way, an amount of change in the input impedance value of the wireless power transmission apparatus for a predetermined period of charging time after the transition from the constant current charging to the constant voltage charging increases, which increases an amount of change in the value of the current input to the wireless power transmission apparatus for the predetermined period of charging time. Such an increase in the amount of change in the value of the current input to the wireless power transmission apparatus prevents excessive input of power after the transition from the constant current charging to the constant voltage charging, and thereby it is possible to prevent excessive heat generation in the wireless power transmission apparatus (the power-supplying coil, the power-supplying resonator, the power-receiving resonator, and the power-receiving coil).

To the contrary, as the load change characteristic is decreased, an amount of change in the input impedance value of the wireless power transmission apparatus for a predetermined period of charging time after the transition from the constant current charging to the constant voltage charging decreases, which decreases an amount of change in the value of the current input to the wireless power transmission apparatus for the predetermined period of charging time. Such a decrease in the amount of change in the value of the current input to the wireless power transmission apparatus suppresses rapid variation, for a short time, in temperature of the wireless power transmission apparatus (the power-supplying coil, the power-supplying resonator, the power-receiving resonator, and the power-receiving coil) after the transition from the constant current charging to the constant voltage charging.

According to another aspect of the invention to solve the above problem, the above thermal control method is arranged such that the load change characteristic is increased by increasing the coupling coefficient between the power-supplying coil and the power-supplying resonator.

With the above method, it is possible to increase the load change characteristic by increasing the coupling coefficient between the power-supplying coil and the power-supplying resonator.

According to another aspect of the invention to solve the above problem, the above thermal control method is arranged such that the load change characteristic is increased by increasing the coupling coefficient between the power-receiving resonator and the power-receiving coil.

With the above method, it is possible to increase the load change characteristic by increasing the coupling coefficient between the power-receiving resonator and the power-receiving coil.

According to another aspect of the invention to solve the above problem, the above thermal control method is arranged such that the load change characteristic is increased by increasing the coupling coefficient between the power-supplying coil and the power-supplying resonator and the coupling coefficient between the power-receiving resonator and the power-receiving coil.

With the above method, it is possible to increase the load change characteristic by increasing the coupling coefficient between the power-supplying coil and the power-supplying resonator and the coupling coefficient between the power-receiving resonator and the power-receiving coil.

According to another aspect of the invention to solve the above problem, the above thermal control method is arranged such that the value of the coupling coefficient between the power-supplying coil and the power-supplying resonator is adjusted by changing a distance between the power-supplying coil and the power-supplying resonator, the value of the coupling coefficient between the power-supplying resonator and the power-receiving resonator is adjusted by changing a distance between the power-supplying resonator and the power-receiving resonator, and the value of the coupling coefficient between the power-receiving resonator and the power-receiving coil is adjusted by changing a distance between the power-receiving resonator and the power-receiving coil.

With the above method, the value of the coupling coefficient between the power-supplying coil and the power-supplying resonator is adjusted by changing the distance between the power-supplying coil and the power-supplying resonator, the value of the coupling coefficient between the power-supplying resonator and the power-receiving resonator is adjusted by changing the distance between the power-supplying resonator and the power-receiving resonator, and the value of the coupling coefficient between the power-receiving resonator and the power-receiving coil is adjusted by changing the distance between the power-receiving resonator and the power-receiving coil. Thus, by a simple operation of physically changing the distance between the power-supplying coil and the power-supplying resonator; the distance between the power-supplying resonator and the power-receiving resonator; and the distance between the power-receiving resonator and the power-receiving coil, it is possible to change the respective coupling coefficients between the corresponding coils. That is, by the simple operation of physically changing the distance between the power-supplying coil and the power-supplying resonator; the distance between the power-supplying resonator and the power-receiving resonator; and the distance between the power-receiving resonator and the power-receiving coil, it is possible to adjust the load change characteristic.

According to another aspect of the invention to solve the above problem, the thermal control method further including setting variable parameters configuring the power-supplying module and the power-receiving module so that values of a transmission characteristic relative to a driving frequency of power supplied to the power-supplying module have a double-hump characteristic having a peak in a lower driving frequency band which is lower than a resonance frequency of the power-supplying module and the power-receiving module, and a peak in a higher driving frequency band which is higher than the resonance frequency, thereby enabling control of a variation tendency of input impedance values of the wireless power transmission apparatus in the constant voltage charging, by adjusting the driving frequency.

In the above method, the wireless power transmission apparatus is set to have the double-hump characteristic. With this, by adjusting the driving frequency of power supplied to the wireless power transmission apparatus thus set to have the double-hump characteristic, it is possible to set the variation tendency of the input impedance values of the wireless power transmission apparatus in the constant voltage charging and thus adjusting the variation tendency in the input current to the wireless power transmission apparatus, thereby controlling heat generation in the wireless power transmission apparatus.

According to another aspect of the invention to solve the above problem, the thermal control method is arranged such that the driving frequency of the power supplied to the power-supplying module is set in a band corresponding to a peak value of the transmission characteristic appearing in the lower driving frequency band lower than the resonance frequency of the power-supplying module and the power-receiving module, or in a band corresponding to a peak value of the transmission characteristic appearing in the higher driving frequency band higher than the resonance frequency of the power-supplying module and the power-receiving module, thereby making adjustment so that the input impedance values of the wireless power transmission apparatus in the constant voltage charging show an increasing tendency.

With the above method, the driving frequency of the power supplied to the power-supplying module is set in the band corresponding to the peak value of the transmission characteristic appearing in the lower driving frequency band lower than the resonance frequency of the power-supplying module and the power-receiving module, or in the band corresponding to the peak value of the transmission characteristic appearing in the higher driving frequency band higher than the resonance frequency of the power-supplying module and the power-receiving module, and thereby adjustment is made so that the input impedance values of the wireless power transmission apparatus in the constant voltage charging show the increasing tendency. This reduces the input current to the wireless power transmission apparatus in the constant voltage charging, consequently reducing heat generation in the wireless power transmission apparatus.

According to another aspect of the invention to solve the above problem, the thermal control method is arranged such that the driving frequency of the power supplied to the power-supplying module is set in a band corresponding to a valley between peak values of the transmission characteristic respectively appearing in the lower drive frequency band and the higher frequency band which are respectively lower and higher than the resonance frequency of the power-supplying module and the power-receiving module, thereby making adjustment so that the input impedance values of the wireless power transmission apparatus in the constant voltage charging show a maintaining tendency or a decreasing tendency.

With the above method, the driving frequency of the power supplied to the power-supplying module is set in the band corresponding to the valley between peak values of the transmission characteristic respectively appearing in the lower drive frequency band and the higher frequency band which are respectively lower and higher than the resonance frequency of the power-supplying module and the power-receiving module, and thereby adjustment is made so that the input impedance values of the wireless power transmission apparatus in the constant voltage charging show a maintaining tendency or a decreasing tendency. This maintains or increases the input current to the wireless power transmission apparatus in the constant voltage charging.

Another aspect of the present invention to solve the above problem is a wireless power transmission apparatus adjusted by the above-described thermal control method.

With the above structure, it is possible to control heat generation in the wireless power transmission apparatus by adjusting the value of a coupling coefficient between coils each included in the power-supplying module or the power-receiving module. In other words, control of heat generation in the wireless power transmission apparatus is possible without a need of an additional component in the wireless power transmission apparatus.

An aspect of the present invention to solve the problem above is a manufacturing method for a wireless power transmission apparatus configured to supply power, by changing a magnetic field, from a power-supplying module to a power-receiving module connected to a power-supplied device including a secondary battery rechargeable using a constant current/constant voltage charging system, the method including

a process of adjusting a load change characteristic, which is represented by an amount of change in input impedance value of the wireless power transmission apparatus for a predetermined period of charging time in constant voltage charging, by adjusting a value of a coupling coefficient between coils each included in the power-supplying module or the power-receiving module.

With the above structure, it is possible to manufacture the wireless power transmission apparatus capable of controlling heat generation in the wireless power transmission apparatus by adjusting the value of a coupling coefficient between coils each included in the power-supplying module or the power-receiving module. In other words, it is possible to manufacture the wireless power transmission apparatus capable of controlling heat generation without a need of an additional component in the wireless power transmission apparatus.

[Advantageous Effects of Invention]

There is provided a thermal control method and the like which makes it possible to control heat generation in a wireless power transmission apparatus without a need of an additional device, by adjusting a load change characteristic, which is represented by an amount of change in the value of the input impedance of the wireless power transmission apparatus for a predetermined period of charging time after a transition from constant current charging to constant voltage charging.

[Brief Description of Drawings]

[FIG. 1] FIG. 1 is a schematic explanatory diagram of a wireless power transmission apparatus.
[FIG. 2] FIG. 2 is an explanatory diagram of an equivalent circuit of the wireless power transmission apparatus.
[FIG. 3] FIG. 3 is a graph indicating charging characteristics of a lithium ion secondary battery.
[FIG. 4] FIG. 4 is an explanatory diagram illustrating transmission characteristic "S21" varying as a function of a driving frequency.
[FIG. 5] FIG. 5 is a graph illustrating input impedance Zin varying as a function of the driving frequency.
[FIG. 6] FIG. 6 is a graph showing measurement results related to Measurement Experiment 1-1.
[FIG. 7] FIG. 7 is a graph showing measurement results related to Measurement Experiment 1-2.
[FIG. 8] FIG. 8 is a graph showing measurement results related to Measurement Experiment 1-3.
[FIG. 9] FIG. 9 includes graphs respectively showing measurement results related to Measurement Experiments 2-1 and 2-2.
[FIG. 10] FIG. 10 includes graphs respectively showing measurement results related to Measurement Experiments 2-3 and 2-4.
[FIG. 11] FIG. 11 is a graph showing measurement results related to Measurement Experiment 2-5.
[FIG. 12] FIG. 12 shows measurement results for the surface temperature of a power-supplying coil related to Measurement Experiment 2-5.
[FIG. 13] FIG. 13 is a graph showing a relation between the distance between coils and a coupling coefficient in wireless power transmission.
[FIG. 14] FIG. 14 is an explanatory diagram illustrating a manufacturing method of the wireless power transmission apparatus.
[FIG. 15] FIG. 15 is a flowchart explaining a method for designing a wireless headset and a charger, including the wireless power transmission apparatus.

[Description of Embodiments]

(Embodiment)

The following describes embodiments of a wireless power transmission apparatus, a thermal control method for the wireless power transmission apparatus, and a manufacturing method for the wireless power transmission apparatus, which are related to the present invention. First, a wireless power transmission apparatus 1 used in the present embodiment is described.

(Structure of Wireless Power Transmission Apparatus 1)

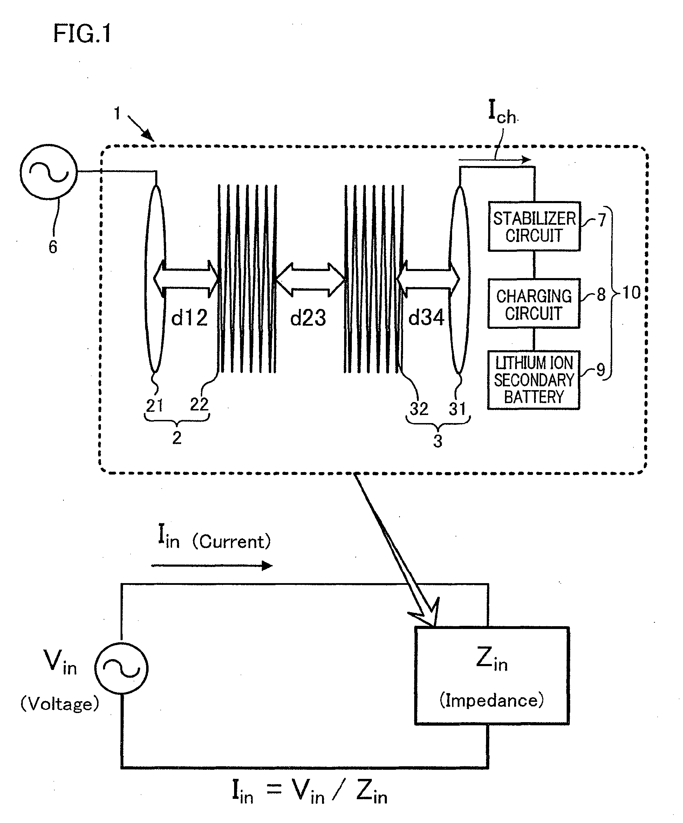

The wireless power transmission apparatus 1 includes: a power-supplying module 2 having a power-supplying coil 21 and a power-supplying resonator 22; and a power-receiving module 3 having a power-receiving coil 31 and a power-receiving resonator 32, as shown in FIG. 1. The power-supplying coil 21 of the power-supplying module 2 is connected to an AC power source 6 having an oscillation circuit configured to set the driving frequency of power supplied to the power-supplying module 2 to a predetermined value. The power-receiving coil 31 of the power-receiving module 3 is connected to a lithium ion secondary battery 9 via a stabilizer circuit 7 configured to rectify the AC power received, and via a charging circuit 8 configured to prevent overcharge. It should be noted that, in the present embodiment, the stabilizer circuit 7, the charging circuit 8, and the lithium ion secondary battery 9 correspond to a power-supplied device 10.

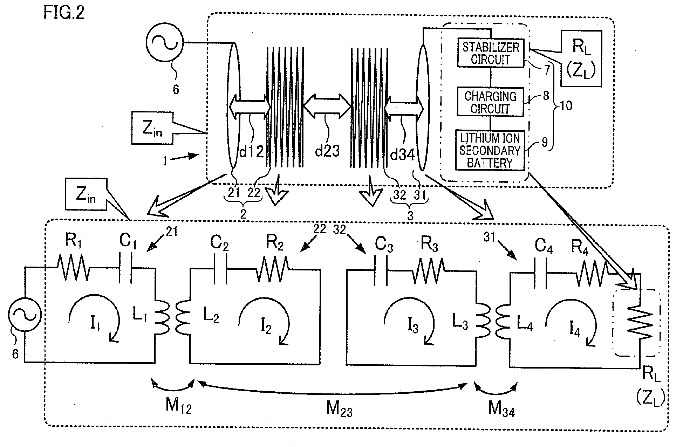

The power-supplying coil 21 plays a role of supplying power obtained from the AC power source 6 to the power-supplying resonator 22 by means of electromagnetic induction. As shown in FIG. 2, the power-supplying coil 21 is constituted by an RLC circuit whose elements include a resistor $R_1$, a coil $L_1$, and a capacitor $C_1$. The coil $L_1$ is formed by winding a copper wire material (coated by an insulation film) with its coil diameter set to 15 mm$\phi$. The total impedance

of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$. Further, the current that flows in the power-supplying coil 21 is $I_1$. The current $I_1$ is identical with an input current Iin input to the wireless power transmission apparatus 1.

The power-receiving coil 31 plays roles of receiving the power having been transmitted as magnetic field energy from the power-supplying resonator 22 to the power-receiving resonator 32, by means of electromagnetic induction, and supplying the power received to the lithium ion secondary battery 9 via the stabilizer circuit 7 and the charging circuit 8. As shown in FIG. 2, the power-receiving coil 31, similarly to the power-supplying coil 21, is constituted by an RLC circuit whose elements include a resistor $R_4$, a coil $L_4$, and a capacitor $C_4$. The coil $L_4$ is formed by winding a copper wire material (coated by an insulation film) with its coil diameter set to 11 mm$\phi$. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. The total impedance of the power-supplied device 10 connected to the power-receiving coil 31 is $Z_L$. Further, the current that flows in the power-receiving coil 31 is $I_4$. While the total impedance of the power-supplied device 10 is $Z_L$, this may be substituted by $R_L$ for the sake of convenience.

As shown in FIG. 2, the power-supplying resonator 22 is constituted by an RLC circuit whose elements include a resistor $R_2$, a coil $L_2$, and a capacitor $C_2$. Further, as shown in FIG. 2, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils resonate with each other at a resonance frequency. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$. The current flowing in the power-supplying resonator 22 is $I_2$, whereas the current flowing in the power-receiving resonator 32 is $I_3$.

In the RLC circuit which is the resonance circuit in each of the power-supplying resonator 22 and the power-receiving resonator 32, the resonance frequency is f which is derived from (Formula 1) below, where the inductance is L and the capacity of capacitor is C. In the present embodiment, the resonance frequency of the power-supplying coil 21, the power-supplying resonator 22, the power-receiving coil 31, and the power-receiving resonator 32 is set to 970 kMHz.

$$f = \frac{1}{2\pi\sqrt{LC}}$$

$$\text{... (Formula 1)}$$

The power-supplying resonator 22 is a solenoid coil made of a copper wire material (coated by an insulation film) with its coil diameter being 15 mm$\phi$. The power-receiving resonator 32 is a solenoid coil made of a copper wire material (coated by an insulation film) with its coil diameter being 11 mm$\phi$. The resonance frequency of the power-supplying resonator 22 and that of the power-receiving resonator 32 are matched with each other. Each of the power-supplying resonator 22 and the power-receiving resonator 32 may be a spiral coil or a solenoid coil as long as it is a resonator using a coil.

In regard to the above, the distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (see FIG. 1).

Further, as shown in FIG. 2, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in the wireless power transmission apparatus 1, a coupling coefficient between the coil $L_1$ and the coil $L_2$ is denoted as $K_{12}$, a coupling coefficient between the coil $L_2$ and the coil $L_3$ is denoted as $K_{23}$, a coupling coefficient between the coil $L_3$ and the coil $L_4$ is denoted as $K_{34}$.

The resistance values, inductances, capacities of capacitors of $R_1$, $L_1$, and $C_1$ of the RLC circuit of the power-

supplying coil 21, $R_2$, $L_2$, and $C_2$ of the RLC circuit of the power-supplying resonator 22, $R_3$, $L_3$, and $C_3$ of the RLC circuit of the power-receiving resonator 32, and $R_4$, $L_4$, and $C_4$ of the RLC circuit of the power-receiving coil 31, and the coupling coefficients $K_{12}$, $K_{23}$, and $K_{34}$ are parameters variable at the stage of designing and manufacturing, and are preferably set so as to satisfy the relational expression of (Formula 4) which is described later.

FIG. 1 shows at its bottom a circuit diagram of the wireless power transmission apparatus 1 (including the stabilizer circuit 7, the charging circuit 8, and the lithium ion secondary battery 9) having the structure as described above. In the figure, the entire wireless power transmission apparatus 1 is shown as a single input impedance Zin. Further, the voltage applied to the wireless power transmission apparatus 1 is indicated as voltage $V_{in}$, and the current input to the wireless power transmission apparatus 1 is indicated as current Iin.

To be more specific about the input impedance Zin of the wireless power transmission apparatus 1, the structure of the wireless power transmission apparatus 1 is expressed in an equivalent circuit as shown in FIG. 2. Based on the equivalent circuit in FIG. 2, the input impedance Zin of the wireless power transmission apparatus 1 is expressed as (Formula 2).

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

$k_{ij}$ is a coupling coefficient between $L_i$ and $L_j$

$$\ldots \text{(Formula 2)}$$

Further, the impedances $Z_1$, $Z_2$, $Z_3$, $Z_4$, and $Z_L$ of the power-supplying coil 21, the power-supplying resonator 22, the power-receiving resonator 32, and the power-receiving coil 31 in the wireless power transmission apparatus 1 of the present embodiment are expressed as (Formula 3).

$$Z_1 = R_1 + j\left(\omega L_1 - \frac{1}{\omega C_1}\right)$$

$$Z_2 = R_2 + j\left(\omega L_2 - \frac{1}{\omega C_2}\right)$$

$$Z_3 = R_3 + j\left(\omega L_3 - \frac{1}{\omega C_3}\right)$$

$$Z_4 = R_4 + j\left(\omega L_4 - \frac{1}{\omega C_4}\right)$$

$$Z_L = R_L$$

$$\ldots \text{(Formula 3)}$$

Introducing the (Formula 3) into the (Formula 2) makes the (Formula 4).

$$Z_{in} = R_1 + j\left(\omega L_1 - \frac{1}{\omega C_1}\right) + \cfrac{(\omega M_{12})^2}{R_2 + j\left(\omega L_2 - \frac{1}{\omega C_2}\right) + \cfrac{(\omega M_{23})^2}{R_3 + j\left(\omega L_3 - \frac{1}{\omega C_3}\right) + \cfrac{(\omega M_{34})^2}{R_4 + j\left(\omega L_4 - \frac{1}{\omega C_4}\right) + R_L}}}$$

... (Formula 4)

With the wireless power transmission apparatus 1, when the resonance frequency of the power-supplying resonator 22 and the resonance frequency of the power-receiving resonator 32 are matched with each other, a magnetic field resonant state is created between the power-supplying resonator 22 and the power-receiving resonator 32. When the magnetic field resonant state is created between the power-supplying resonator 22 and the power-receiving resonator 32 by having these resonators resonating with each other, power is transmitted from the power-supplying resonator 22 to the power-receiving resonator 32 as magnetic field energy. Then, the power received by the power-receiving resonator 32 is supplied to the lithium ion secondary battery 9 thus charging the same via the power-receiving coil 31, the stabilizer circuit 7, and the charging circuit 8.

(Thermal Control Method for Wireless Power Transmission Apparatus)

The following describes a thermal control method for the wireless power transmission apparatus 1, based on the above-described structure of the wireless power transmission apparatus 1.

First described is the mechanism of the temperature increase in the wireless power transmission apparatus 1 and its counter measure, based on the charging characteristic of the lithium ion secondary battery 9 at the time of charging, the lithium ion secondary battery 9 being a target to which power is supplied using the wireless power transmission apparatus 1 of the present embodiment.

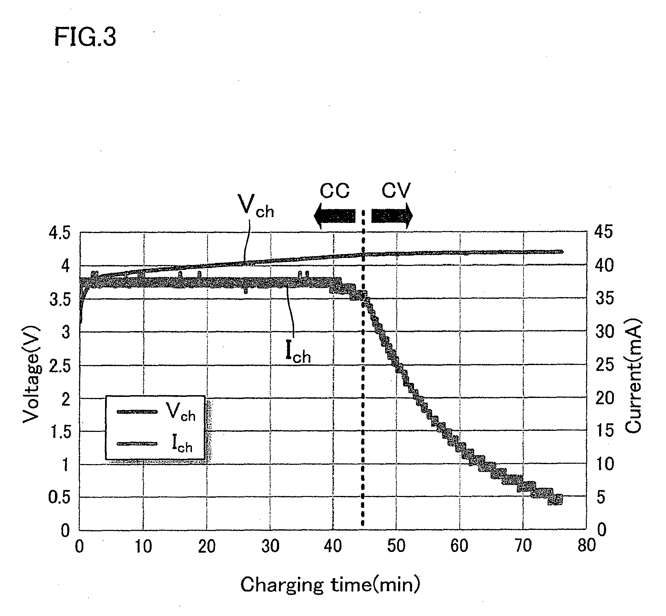

In the present embodiment, the lithium ion secondary battery 9 is used as one of members collectively referred to as the power-supplied device 10 to which the power is supplied. To charge the lithium ion secondary battery 9, a constant current/constant voltage charging system is used in general. In such charging of the lithium ion secondary battery 9 using the constant current/constant voltage charging system, the lithium ion secondary battery 9 is charged with a constant current ($I_{ch}$) (CC: Constant Current) for a while after the charging is started, as indicated by the charging characteristic of the lithium ion secondary battery 9 shown in FIG. 3. Then, the voltage ($V_{ch}$) applied to the lithium ion secondary battery 9 increases to a predetermined upper limit voltage (4.2 V in the present embodiment), while the battery 9 is charged with the constant current. After the voltage ($V_{ch}$) increases to the upper limit voltage, charging is performed at a constant voltage (CV: Constant Voltage), while the upper limit voltage is maintained. During the constant voltage charging (CV), the value of the current ($I_{ch}$) input to the lithium ion secondary battery 9 decreases. The charging is completed when the value of the current reaches a predetermined value, or after a predetermined time has been elapsed.

With the decrease of the value of the current ($I_{ch}$) input to the lithium ion secondary battery 9, the value of the load impedance of the power-supplied device 10 including the lithium ion secondary battery 9 increases.

Then, the input impedance $Z_{in}$ of the entire wireless power transmission apparatus 1 including the power-supplied device 10 also varies.

Assuming that a voltage Vin is applied to the wireless power transmission apparatus 1 and the current Iin flows therein for t seconds (sec.), the thermal energy J generated (amount of heat generated) in the wireless power transmission apparatus 1 is derived from (Formula 5) (Joule's law).

$$J = I_{in} \times V_{in} \times t(\sec)$$

... (Formula 5)

(Formula 6) is an expression for the current Iin described using the voltage $V_{in}$, and input impedance Zin (see FIG. 1).

$$I_{in} = \frac{V_{in}}{Z_{in}}$$

$$\ldots \text{(Formula 6)}$$

Since, in the present embodiment, the voltage Vin applied by the AC power source 6 to the wireless power transmission apparatus 1 is kept constant (effective value in the present embodiment is 5 V), substituting (Formula 6) to (Formula 5) makes a relational expression of (Formula 7).

$$J = \frac{V_{in}^2}{Z_{in}} \times t(\text{sec})$$

$$\ldots \text{(Formula 7)}$$

An increase in the amount of the thermal energy J generated in the wireless power transmission apparatus 1 leads to reduction of the life of electronic components structuring the wireless power transmission apparatus 1. Thus, it is required to reduce the amount of the thermal energy J generated in the wireless power transmission apparatus 1.

According to (Formula 7), if the value of the input impedance Zin in the constant voltage charging is increased, the value of the current Iin input to the wireless power transmission apparatus 1 decreases (see Formula 6). As a result, the amount of heat generated in the wireless power transmission apparatus 1 (the thermal energy J generated in the wireless power transmission apparatus 1) after the transition from the constant current charging (CC) to the constant voltage charging (CV) is reduced, which consequently restrains an increase in the temperature of the wireless power transmission apparatus 1.

Further, if the load change characteristic, which is represented by an amount of change in the value of the input impedance Zin of the wireless power transmission apparatus 1 for a predetermined period of charging time in the constant voltage charging (CV), can be increased, the amount of change in the value of the current $I_{in}$ input to the wireless power transmission apparatus 1 for a predetermined period of charging time is increased. This prevents excessive input of power after a transition from the constant current charging to the constant voltage charging, thereby preventing excessive heat generation in the wireless power transmission apparatus 1.

Meanwhile, if the load change characteristic, which is represented by an amount of change in the value of the input impedance Zin of the wireless power transmission apparatus 1 for a predetermined period of charging time in the constant voltage charging (CV), can be decreased, the amount of change in the value of the current $I_{in}$ input to the wireless power transmission apparatus 1 for a predetermined period of charging time is decreased. This prevents rapid change of the temperature of the wireless power transmission apparatus 1 in a short time.

(Setting of Variation Tendency in Input Impedance Zin in Constant Voltage Charging)

In the present embodiment, to increase the value of the input impedance Zin in the constant voltage charging (CV) of the constant current/constant voltage charging of the lithium ion secondary battery 9 using the wireless power transmission apparatus 1, variable parameters configuring the power-supplying module 2 and the power-receiving module 3 are set so that the later-described transmission characteristic "S21" of the wireless power transmission apparatus 1 relative to the driving frequency of the power supplied to the wireless power transmission apparatus 1 has a double-hump characteristic. Such variable parameters include: the resistance values, inductances, and capacities of capacitors of the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, and the $R_4$, $L_4$, and $C_4$ of the RLC circuit of the power-receiving coil 31; and the coupling coefficients $K_{12}$, $K_{23}$, and $K_{34}$. After setting is made so that the transmission characteristic "S21" of the wireless power transmission apparatus 1 relative to the driving frequency of the power supplied to the wireless power transmission apparatus 1 has the double-hump characteristic, the driving frequency of the power supplied to the wireless power transmission apparatus 1 is adjusted, and thereby setting the variation tendency (e.g., to an increasing or decreasing tendency) of input impedance values of the wireless power transmission apparatus 1 in the constant voltage charging, to reduce the amount of heat generated in the wireless power transmission apparatus 1.

(Measurement Experiments 1-1 to 1-3)

The following describes, with reference to Measurement Experiments 1-1 to 1-3, what kind of variation tendency the input impedance values of the wireless power transmission apparatus 1 in the constant voltage charging show when the driving frequency of the power supplied to the wireless power transmission apparatus 1 is adjusted in the situation where setting is made so that the transmission characteristic "S21" of the wireless power transmission apparatus 1 relative to the driving frequency of the power supplied to the wireless power transmission apparatus 1 has the double-hump characteristic.

In the wireless power transmission apparatus 1 used in Measurement Experiments 1-1 to 1-3, the power-supplying coil 21 is constituted by an RLC circuit whose elements include a resistor $R_1$, a coil $L_1$, and a capacitor $C_1$, and the coil diameter is set to 15 mm$\phi$. Similarly, the power-receiving coil 31 is constituted by an RLC circuit whose elements include a resistor $R_4$, a coil $L_4$, and a capacitor $C_4$, and the coil diameter is set to 11 mm$\phi$. Further, the power-supplying resonator 22 is constituted by an RLC circuit whose elements include a resistor $R_2$, a coil $L_2$, and a capacitor $C_2$, and a solenoid coil with a coil diameter of 15 mm$\phi$ is adopted as the coil $L_2$. Further, the power-receiving resonator 32 is constituted by an RLC circuit whose elements include a resistor $R_3$, a coil $L_3$, and a capacitor $C_3$, and a solenoid coil with a coil diameter of 11 mm$\phi$ is adopted as the coil $L_3$. The values of $R_1$, $R_2$, $R_3$, and $R_4$ in the wireless power transmission apparatus 1 used in Measurement Experiments 1-1 to 1-3 were set to 0.65 $\Omega$, 0.65 $\Omega$, 2.47 $\Omega$, and 2.0 $\Omega$, respectively. Further, the values of $L_1$, $L_2$, $L_3$, and $L_4$ were set to 3.1 $\mu$H, 3.1 $\mu$H, 18.4 $\mu$H, and 12.5 $\mu$H, respectively. Further, the coupling coefficients $K_{12}$, $K_{23}$, and $K_{34}$ were set to 0.46, 0.20, and 0.52, respectively. The resonance frequency of the power-supplying resonator 22 and the power-receiving resonator 32 was 970 kHz.

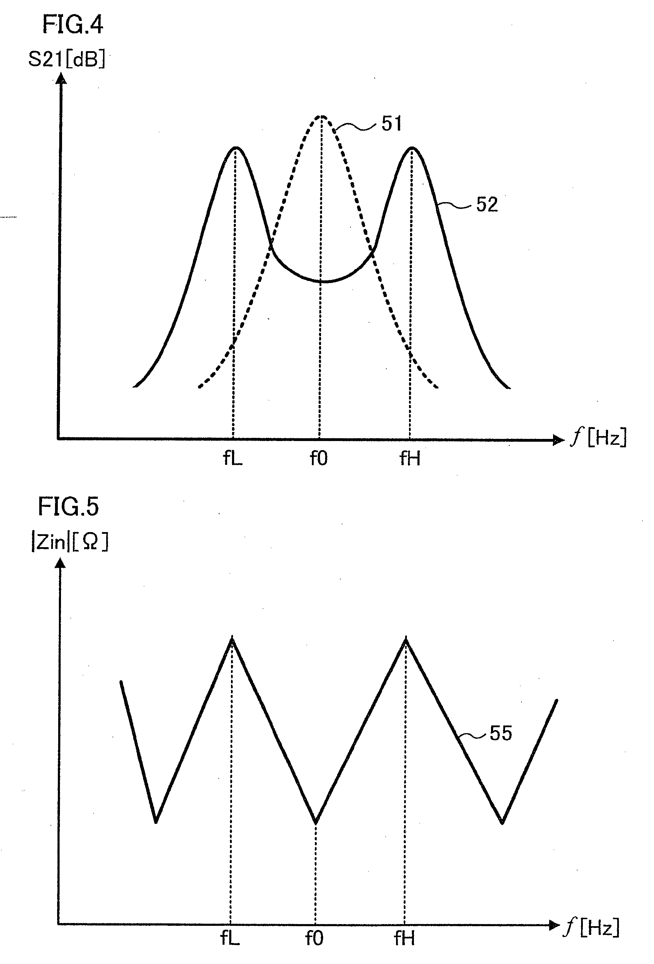

In Measurement Experiments 1-1 to 1-3, after the wireless power transmission apparatus 1 was set as described above so as to have the double-hump characteristic, the current Iin and the input impedance $Z_{in}$ during charging (power supply) of the lithium ion secondary battery 9 were measured in three different modes of the driving frequency of the AC power supplied to the power-supplying module 2: an inphase resonance mode (fL), an antiphase resonance mode (fH), and a resonance frequency mode (f0), which will be described later (see FIG. 4 and FIG. 5). In Measurement Experiments 1-1 to 1-3, the current $I_{in}$ and the input impedance $Z_{in}$ were measured each as a function of charging time (min.), under the condition that the input voltage Vin from the AC power source 6 to the wireless power transmission apparatus 1 is 5V.

(Double-hump Characteristic)

In Measurement Experiments, used is the wireless power transmission apparatus 1 arranged so that the transmission characteristic "S21" of the wireless power transmission apparatus 1 relative to the driving frequency of the power supplied to the wireless power transmission apparatus 1 has the double-hump characteristic. The transmission characteristic "S21" is formed of signals measured by a network analyzer (e.g. , E5061B produced by Agilent Technologies, Inc.) connected to the wireless power transmission apparatus 1, and is indicated in decibel. The greater the value is, the higher the power transmission efficiency is. The transmission characteristic "S21" of the wireless power transmission apparatus 1 relative to the driving frequency of the power supplied to the wireless power transmission apparatus 1 may have either single-hump or double-hump characteristic, depending on the strength of coupling (magnetic coupling) by the magnetic field between the power-supplying module 2 and the power-receiving module 3. The single-hump characteristic means the transmission characteristic "S21" relative to the driving frequency has a single peak which occurs in the resonance frequency band (around f0) (see dotted line 51 FIG. 4). The double-hump characteristic on the other hand means the transmission characteristic S21 relative to the driving frequency has two peaks, one of the peaks occurring in a drive frequency band lower than the resonance frequency (around fL), and the other occurring in a drive frequency band higher than the resonance frequency (around fH) (see solid line 52 in FIG. 4). The double-hump characteristic, to be more specific, means that the reflection characteristic "S11" measured with the network analyzer connected to the wireless power transmission apparatus 1 has two peaks. Therefore, even if the transmission characteristic S21 relative to the driving frequency appears to have a single peak, the transmission characteristic "S21" has a double-hump characteristic if the reflection characteristic "S11" measured has two peaks. It should be noted that the power transmission efficiency is a ratio of power received by the power-receiving module 3 to the power supplied to the power-supplying module 2.

In the wireless power transmission apparatus 1 having the single-hump characteristic, the transmission characteristic "S21" is maximized (the power transmission efficiency is maximized) when the driving frequency is at the resonance frequency f0, as indicated by the dotted line 51 of FIG. 4.

On the other hand, in the wireless power transmission apparatus 1 having the double-hump characteristic, the transmission characteristic "S21" is maximized in the driving frequency band (around fL) lower than the resonance frequency f0, and in the driving frequency band (around fH) higher than the resonance frequency f0, as indicated by the solid line 52 of FIG. 4.

It should be noted that, in general, if the distance between the power-supplying resonator and the power-receiving resonator is the same, the maximum value of the transmission characteristic "S21" having the double-hump characteristic (the value of the transmission characteristic "S21" at fL or fH) is lower than the maximum value of the transmission characteristic "S21" having the single-hump characteristic (the value of the transmission characteristic "S21" at f0) (See graph in FIG. 4).

Specifically, when the driving frequency of the AC power to the power-supplying module 2 is set to the frequency fL nearby the peak on the low frequency side in the of double-hump characteristic (in the inphase resonance mode), the power-supplying resonator 22 and the power-receiving resonator 32 are resonant with each other in inphase, and the current in the power-supplying resonator 22 and the current in the power-receiving resonator 32 both flow in the same direction. As the result, as shown in the graph of FIG. 4, the value of the transmission characteristic "S21" is made relatively high, even though the driving frequency does not match the resonance frequency of the power-supplying resonator 22 of the power-supplying module 2 and the power-receiving resonator 32 of the power-receiving module 3, although the value still may not be as high as that of the transmission characteristic "S21" in wireless power transmission apparatuses in general aiming at maximizing the power transmission efficiency (see dotted line 51). It should be noted that the resonance state in which the current in the coil (power-supplying resonator 22) of the power-supplying module 2 and the current in the coil (power-receiving resonator 32) of the power-receiving module 3 both flow in the same direction is referred to as an inphase resonance mode.

Further, in the inphase resonance mode, because the magnetic field generated on the outer circumference side of the power-supplying resonator 22 and the magnetic field generated on the outer circumference side of the power-receiving resonator 32 cancel each other out, a magnetic field space having a lower magnetic field strength than the magnetic field strengths in positions not on the outer circumference side of the power-supplying resonator 22 and the power-receiving resonator 32 (e.g. , the magnetic field strength on the inner circumference side of the power-supplying resonator 22 and the power-receiving resonator 32) is formed on the outer circumference side of the power-supplying resonator 22 and the power-receiving resonator 32, as the influence of the magnetic fields is lowered. When the stabilizer circuit 7, the charging circuit 8, the lithium ion secondary battery 9, and the like which are desired to be less influenced by the magnetic field are placed in this magnetic field space, occurrence of eddy current attributed to the magnetic field in these components is reduced or prevented. This restrains negative effects due to generation of heat.

On the other hand, when the driving frequency of the AC power to the power-supplying module 2 is set to the frequency fH nearby the peak on the high frequency side in the double-hump characteristic (in the antiphase resonance mode), the power-supplying resonator 22 and the power-receiving resonator 32 resonate with each other in antiphase, and the current in the power-supplying resonator 22 and the current in the power-receiving resonator 32 flow opposite directions to each other. As the result, as shown in the graph of FIG. 4, the value of the transmission characteristic "S21" is made relatively high, even though the driving frequency does not match the resonance frequency of the power-supplying resonator 22 of the power-supplying module 2 and the power-receiving resonator 32 of the power-receiving module 3, although the value still may not be as high as that of the transmission characteristic "S21" in wireless power transmission apparatuses in general aiming at maximizing the power transmission efficiency (see dotted line 51). The resonance state in which the current in the coil (power-supplying resonator 22) of the power-supplying module 2 and the current in the coil (power-receiving resonator 32) of the power-receiving module 3 flow opposite directions to each other is referred to as an antiphase resonance mode.

Further, in the antiphase resonance mode, because the magnetic field generated on the inner circumference side of the power-supplying resonator 22 and the magnetic field generated on the inner circumference side of the power-receiving resonator 32 cancel each other out, a magnetic field space having a lower magnetic field strength than the magnetic field strengths in positions not on the inner circumference side of the power-supplying resonator 22 and the power-receiving resonator 32 (e.g. , the magnetic field strengths on the outer circumference side of the power-supplying resonator 22 and the power-receiving resonator 32) is formed on the outer circumference side of the power-supplying resonator 22 and the power-receiving resonator 32, as the influence of the magnetic fields is lowered. When the stabilizer circuit 7, the charging circuit 8, the lithium ion secondary battery 9, and the like which are desired to be less influenced by the magnetic field are placed in this magnetic field space, occurrence of eddy current attributed to the magnetic field in these components is reduced or prevented. This restrains negative effects due to generation of heat. Further, since the magnetic field space formed in this antiphase resonance mode is formed on the inner circumference side of the power-supplying resonator 22 and the power-receiving resonator 32, arranging the electronic components such as the stabilizer circuit 7, the charging circuit 8, the lithium ion secondary battery 9, and the like within this space makes the wireless power transmission apparatus 1 itself more compact, and improves the freedom in designing.

When the driving frequency of the AC power supplied to the power-supplying module 2 is set to the inphase resonance mode (fL) or to the antiphase resonance mode (fH) in the situation where the transmission characteristic "S21" of the wireless power transmission apparatus 1 relative to the driving frequency of the power supplied to the wireless power transmission apparatus 1 has the double-hump characteristic, the value of the input impedance $Z_{in}$ of the wireless power transmission apparatus 1 is maximized while the power transmission efficiency is kept at a high level, as shown in FIG. 5 (see the solid line 55). Meanwhile, when the driving frequency of the AC power to the power-supplying module 2 is set to the resonance frequency (f0), the value of the input impedance Zin of the wireless power transmission apparatus 1 is minimized, as shown in FIG. 5 (see the solid line 55). In Measurement Experiments 1-1 to 1-3, the current Iin and the input impedance $Z_{in}$ during charging (power supply) of the lithium ion secondary battery 9 were measured in the three modes of the driving frequency of the AC power supplied to the power-supplying module 2: the inphase resonance mode (fL), the antiphase resonance mode (fH), and the resonance frequency mode (f0).

In the present embodiment, as long as the transmission characteristic "S21" of the wireless power transmission apparatus 1 relative to the driving frequency of the power supplied to the wireless power transmission apparatus 1 has the double-hump characteristic, the settings and combinations of the variable parameters configuring the power-supplying module 2 and the power-receiving module 3 fall within design matters and are freely modifiable, the variable parameters including: the resistance values, inductances, and capacities of capacitors of the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, and the $R_4$, $L_4$, and $C_4$ of the RLC circuit of the power-receiving coil 31, and the coupling coefficients $K_{12}$, $K_{23}$, and $K_{34}$.

(Measurement Experiment 1-1: Driving Frequency set in Inphase Resonance Mode)

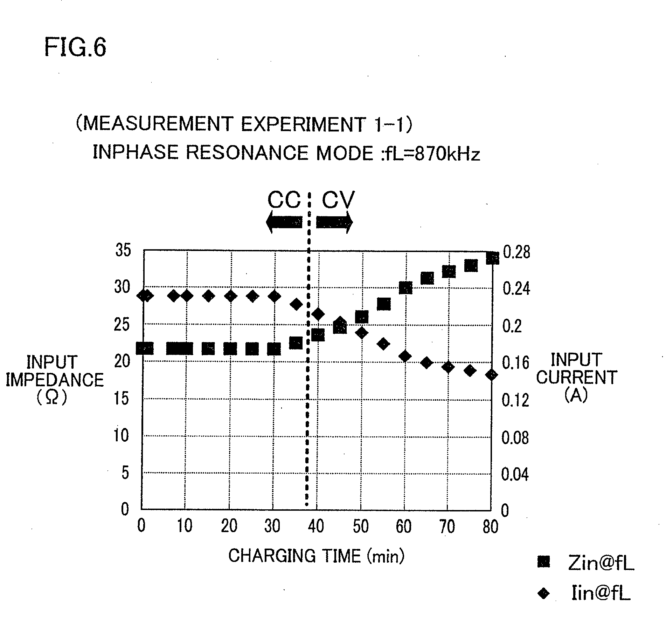

In Measurement Experiment 1-1, the driving frequency of the AC power to the power-supplying module 2 was set to the frequency fL nearby the peak on the low frequency side (inphase resonance mode: fL = 870 kHz) of the double-hump characteristic. Then, the input current Iin and the input impedance $Z_{in}$ were measured as a function of the charging time (min.) in this setting. The measurement results are shown in FIG. 6. It should be noted that the input voltage $V_{in}$ was 5V (constant).

The measurement results in FIG. 6 show that the values of the input impedance Zin after the transition from constant current charging (CC) to constant voltage charging (CV) show an increasing tendency. It can be seen that along with the increasing tendency of the values of the input impedance $Z_{in}$, the values of the input current Input current $I_{in}$ show a decreasing tendency (see Formula 6).

According to the results of Measurement Experiment 1-1, when the driving frequency of the AC power supplied to the power-supplying module 2 is set to the frequency fL nearby the peak on the low frequency side of the double-hump characteristic after setting is made so that the transmission characteristic "S21" of the wireless power transmission apparatus 1 relative to the driving frequency of the power to the wireless power transmission apparatus 1 has the double-hump characteristic, the values of the input impedance Zin after the transition from the constant current charging (CC) to the constant voltage charging (CV) show the increasing tendency. This reduces the input current Iin to the wireless power transmission apparatus 1 in the constant voltage charging (CV), consequently reducing heat generation in the wireless power transmission apparatus 1.

(Measurement Experiment 1-2: Driving Frequency Set in Antiphase Resonance Mode)

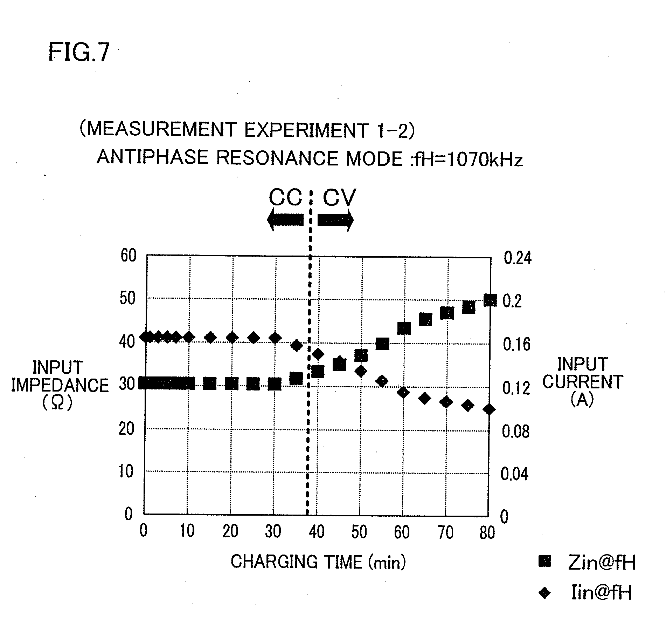

In Measurement Experiment 1-2, the driving frequency of the AC power to the power-supplying module 2 was set to the frequency fH nearby the peak on the high frequency side (antiphase resonance mode: fH = 1070 kHz) of the double-hump characteristic. Then, the input current Iin and the input impedance Zin were measured as a function of the charging time (min.) in this setting. The measurement results are shown in FIG. 7. It should be noted that the input voltage Vin was 5V (constant).

The measurement results in FIG. 7 show that the values of the input impedance $Z_{in}$ after the transition from constant current charging (CC) to constant voltage charging (CV) show an increasing tendency. It can be seen that along with the increasing tendency of the values of the input impedance Zin, the values of the input current Input current Iin show a decreasing tendency (see Formula 6).

According to the results of Measurement Experiment 1-2, when the driving frequency of the AC power supplied to the power-supplying module 2 is set to the frequency fH nearby the peak on the high frequency side of the double-hump characteristic after setting is made so that the transmission characteristic "S21" of the wireless power transmission apparatus 1 relative to the driving frequency of the power to the wireless power transmission apparatus 1 has the double-hump characteristic, the values of the input impedance Zin after the transition from the constant current charging (CC) to the constant voltage charging (CV) show the increasing tendency. This reduces the input current Iin to the wireless power transmission apparatus 1 in the constant voltage charging (CV), consequently reducing heat generation in the wireless power transmission apparatus 1.

(Measurement Experiment 1-3: Driving Frequency Set to Resonance frequency)

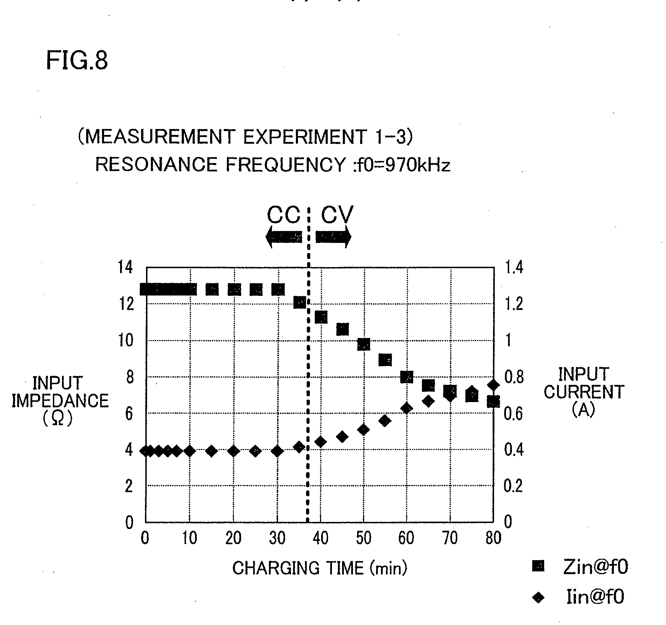

In Measurement Experiment 1-3, the driving frequency of the AC power to the power-supplying module 2 was set to the resonance frequency f0 (the resonance frequency f0 = 970 kHz) of the double-hump characteristic. Then, the input current Iin and the input impedance $Z_{in}$ were measured as a function of the charging time (min.) . The measurement results are shown in FIG. 8. It should be noted that the input voltage Vin was 5V (constant).

The measurement results in FIG. 8 show that the values of the input impedance Zin after the transition from constant current charging (CC) to constant voltage charging (CV) show a decreasing tendency. It can be seen that along with the decreasing tendency of the values of the input impedance $Z_{in}$, the values of the input current Input current Iin show an increasing tendency (see Formula 6).

According to the results of Measurement Experiment 1-3, when the driving frequency of the AC power supplied to the power-supplying module 2 is set to the resonance frequency f0 of the double-hump characteristic after setting is made so that the transmission characteristic "S21" of the wireless power transmission apparatus 1 relative to the driving frequency of the power to the wireless power transmission apparatus 1 has the double-hump characteristic, the values of the input impedance $Z_{in}$ after the transition from the constant current charging (CC) to the constant voltage charging (CV) show the decreasing tendency.

The above Measurement Experiment 1-1 to 1-3 show that by adjusting the driving frequency of the AC power supplied to the power-supplying module 2 after setting is made so that the transmission characteristic "S21" of the wireless power transmission apparatus 1 relative to the driving frequency of the power to the wireless power transmission apparatus 1 has the double-hump characteristic, it is possible to set the variation tendency of the values of the input impedance $Z_{in}$ of the wireless power transmission apparatus 1 in the constant voltage charging and thus adjusting the variation tendency of the input current Iin to the wireless power transmission apparatus 1, thereby controlling heat generation in the wireless power transmission apparatus 1. It should be noted that, according to the Measurement Experiments 1-1 to 1-3, if the driving frequency of the AC power supplied to the power-supplying module 2 is set to a predetermined value between the frequency fL of the inphase resonance mode and the resonance frequency f0, or between the resonance frequency f0 and frequency fH of the antiphase resonance mode, it is possible to maintain a constant value of the input impedance Zin of the wireless power transmission apparatus 1 during the constant voltage charging.

Further, by setting the driving frequency of the power supplied to the power-supplying module 2 in a band corresponding to a peak value (fL) of the transmission characteristic appearing in the lower driving frequency band lower than the resonance frequency (f0) of the power-supplying module 2 and the power-receiving module 3, it is possible to make adjustment so that the values of the input impedance Zin of the wireless power transmission apparatus 1 in the constant voltage charging show an increasing tendency. This reduces the input current Iin to the wireless power transmission apparatus 1 in the constant voltage charging, consequently reducing heat generation in the wireless power transmission apparatus 1.

Further, by setting the driving frequency of the power supplied to the power-supplying module 2 in a band corresponding to a peak value (fH) of the transmission characteristic appearing in the higher driving frequency band higher than the resonance frequency (f0) of the power-supplying module 2 and the power-receiving module 3, it is possible to make adjustment so that the values of the input impedance Zin of the wireless power transmission apparatus 1 in the constant voltage charging show an increasing tendency. This reduces the input current Iin to the wireless power transmission apparatus 1 in the constant voltage charging, consequently reducing heat generation in the wireless power transmission apparatus 1.

Further, by setting the driving frequency of the power supplied to the power-supplying module 2 in a band corresponding to valley between the peak value (fL) and the peak value (fH) of the transmission characteristic respectively appearing in the lower driving frequency band and the higher driving frequency band which are respectively lower and higher than the resonance frequency (f0) of the power-supplying module 2 and the power-receiving module 3, it is possible to make adjustment so that the values of the input impedance Zin of the wireless power transmission apparatus 1 in the constant voltage charging show a maintaining tendency (tendency to stay the same) or a decreasing tendency. This maintains or increases the input current Iin to the wireless power transmission apparatus 1 in the constant voltage charging.

(Setting of Load Change Characteristic)

In the situation where, for example, the variation tendency of the input impedance values of the wireless power transmission apparatus 1 in the constant voltage charging (CV) is set to the increasing tendency as is in Measurement Experiment 1-1, if the load change characteristic, which is represented by an amount of change in the value of the input impedance $Z_{in}$ of the wireless power transmission apparatus 1 for a predetermined period of the charging time in the constant voltage charging (CV), can be increased, an amount of change in the value of the current $I_{in}$ input to the wireless power transmission apparatus 1 for a predetermined period of charging time is increased. This prevents excessive input of power after the transition from the constant current charging to the constant voltage charging, thereby preventing excessive heat generation in the wireless power transmission apparatus 1 with readiness.

Now, the load change characteristic is represented by an amount of change in the input impedance $Z_{in}$ of the wireless power transmission apparatus 1 for a predetermined period of charging time in the constant voltage charging. That is, assuming that the X coordinate represents the charging time in the constant voltage charging (CV) and the Y coordinate represents the input impedance Zin (see the input impedance $Z_{in}$ in FIG. 6), the load change characteristic is the ratio of the amount of change in the Y coordinate ($\Delta$Y) to a given amount of change in the X coordinate ($\Delta$X), i.e., the slope (note that the absolute value of the slope is used as the load change characteristic). Thus, as the load change characteristic increases, an amount of change in the value of the input impedance $Z_{in}$ of the wireless power transmission apparatus 1 for a predetermined period of charging time in the constant voltage charging increases. That is, the slope is large. In other words, when the load change characteristic is increased, the current Iin input to the wireless power transmission apparatus 1 is decreased in a short time. This prevents excessive input of power after the transition from the constant current charging (CC) to the constant voltage charging (CV), thereby preventing excessive heat generation in the wireless power transmission apparatus with readiness.

(Adjustment of Load Change Characteristic with Coupling Coefficient)

In the present embodiment, the load change characteristic is adjusted by changing the coupling coefficient (s) $k_{12}$, $k_{23}$, and/or $k_{34}$. The following will describes how the load change characteristic changes by changing the coupling coefficient(s) $k_{12}$, $k_{23}$, and/or $k_{34}$ and its ways, with reference to Measurement Experiments 2-1 to 2-5.

(Measurement Experiment 2-1)

The values of $R_1$, $R_2$, $R_3$, and $R_4$ in the wireless power transmission apparatus 1 used in Measurement Experiments 2-1 were set to 0.65 $\Omega$, 0.65 $\Omega$, 2.47 $\Omega$, and 2.0 $\Omega$, respectively. Further, the values of $L_1$, $L_2$, $L_3$, and $L_4$ were set to 3.1 $\mu$H, 3.1 $\mu$H, 18.4 $\mu$H, and 12.5 $\mu$H, respectively. The resonance frequency of the power-supplying resonator 22 and the power-receiving resonator 32 was 970 kHz.

In Measurement Experiment 2-1, after the wireless power transmission apparatus 1 was set as described above so as to have the double-hump characteristic, the driving frequency of the AC power to the power-supplying module 2 was set to the antiphase resonance mode (fH). Then, while the coupling coefficients $k_{23}$ and $k_{34}$ were fixed to 0.20 and 0.52 respectively, the input impedance Zin at the time of charging (power-supplying to) the lithium ion secondary battery 9 was measured for the case where the coupling coefficient $k_{12}$ was set to 0.3 and for the case where the coupling coefficient $k_{12}$ was set to 0.46. In Measurement Experiment 2-1, the input impedance Zin was measured as a function of the charging time (min.), under the condition that the input voltage Vin from the AC power source 6 to the wireless power transmission apparatus 1 was 5 V.

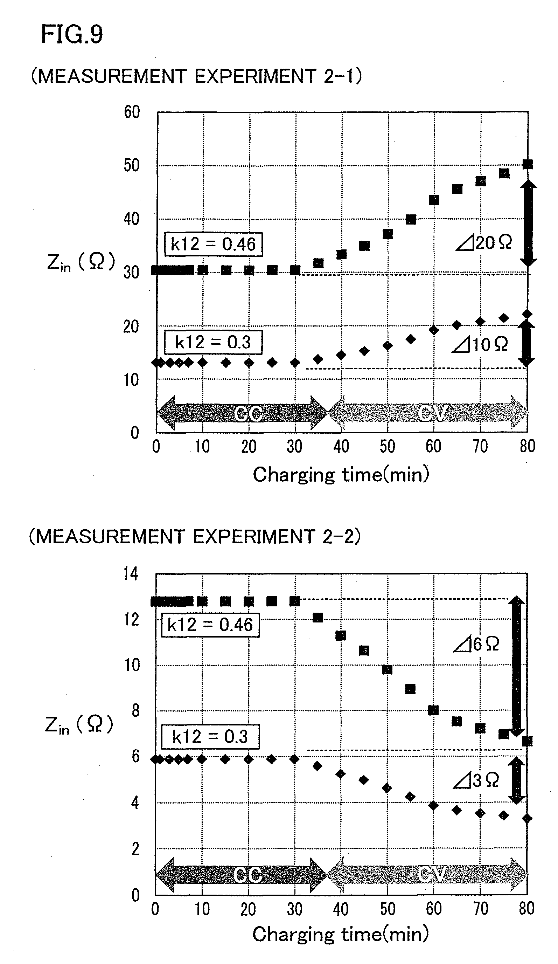

According to the measurement results of Measurement Experiment 2-1 shown in FIG. 9, in the case where the coupling coefficient $k_{12}$ was 0.3, an amount of change in the value of the input impedance Zin for a predetermined period of charging time in the constant voltage charging (CV) was approximately 10 $\Omega$. Meanwhile, in the case where the coupling coefficient $k_{12}$ was 0.46, an amount of change in the value of the input impedance $Z_{in}$ for the predetermined period of charging time in the constant voltage charging (CV) was approximately 20 $\Omega$. Thus, the load change characteristic is larger in the case where the coupling coefficient $k_{12}$ was 0.46 than in the case where the coupling coefficient $k_{12}$ was 0.3.

(Measurement Experiment 2-2)

The wireless power transmission apparatus 1 used in Measurement Experiments 2-2 is identical to that used in Measurement Experiment 2-1. In Measurement Experiment 2-2, after the wireless power transmission apparatus 1 was set to have the double-hump characteristic, the driving frequency of the AC power to the power- supplying module 2 was set to the resonance frequency (f0) of the power-supplying resonator 22 and the power-receiving resonator 32. Then, while the coupling coefficients $k_{23}$ and $k_{34}$ were fixed to 0.20 and 0.52 respectively, the input impedance Zin at the time of charging (power-supplying to) the lithium ion secondary battery 9 was measured for the case where the coupling coefficient $k_{12}$ was set to 0.3 and for the case where the coupling coefficient $k_{12}$ was set to 0.46. In Measurement Experiment 2-2, the driving frequency of the AC power supplied to the power-supplying module 2 was set to the resonance frequency (f0) of the power-supplying resonator 22 and the power-receiving resonator 32, to cause the value of the input impedance Zin after the transition from the constant current charging (CC) to the constant voltage charging (CV) to have the decreasing tendency.

According to the measurement results of Measurement Experiment 2-2 shown in FIG. 9, in the case where the coupling coefficient $k_{12}$ was 0.3, an amount of change in the value of the input impedance Zin for a predetermined period of charging time in the constant voltage charging (CV) was approximately 3 $\Omega$. Meanwhile, in the case where the coupling coefficient $k_{12}$ was 0.46, an amount of change in the value of the input impedance Zin for the predetermined period of charging time in the constant voltage charging (CV) was approximately 6$\Omega$. Thus, the load change characteristic is larger in the case where the coupling coefficient $k_{12}$ was 0.46 than in the case where the coupling coefficient $k_{12}$ was 0.3. Note that, the slope, which is the ratio of the amount of change in the input impedance $Z_{in}$ of the wireless power transmission apparatus 1 to the predetermined period of charging time in the constant voltage charging, is negative (-) in the above case. However, as described above, because the absolute value of the slope is used as the load change characteristic is, it is determined that the load change characteristic is larger in the case where the coupling coefficient $k_{12}$ was 0.46, also in Measurement Experiment 2-2.

(Measurement Experiment 2-3)

The wireless power transmission apparatus 1 used in Measurement Experiments 2-3 is identical to that used in Measurement Experiment 2-1. In Measurement Experiment 2-2, after the wireless power transmission apparatus 1 was set to have the double-hump characteristic, the driving frequency of the AC power to the power-supplying module 2 was set to the antiphase resonance mode (fH) . Then, while the coupling coefficients $k_{12}$ and $k_{23}$ were fixed to 0.46 and 0.20 respectively, the input impedance Zin at the time of charging (power-supplying to) the lithium ion secondary battery 9 was measured for the case where the coupling coefficient $k_{34}$ was set to 0.25 and for the case where the coupling coefficient $k_{34}$ was set to 0.52.

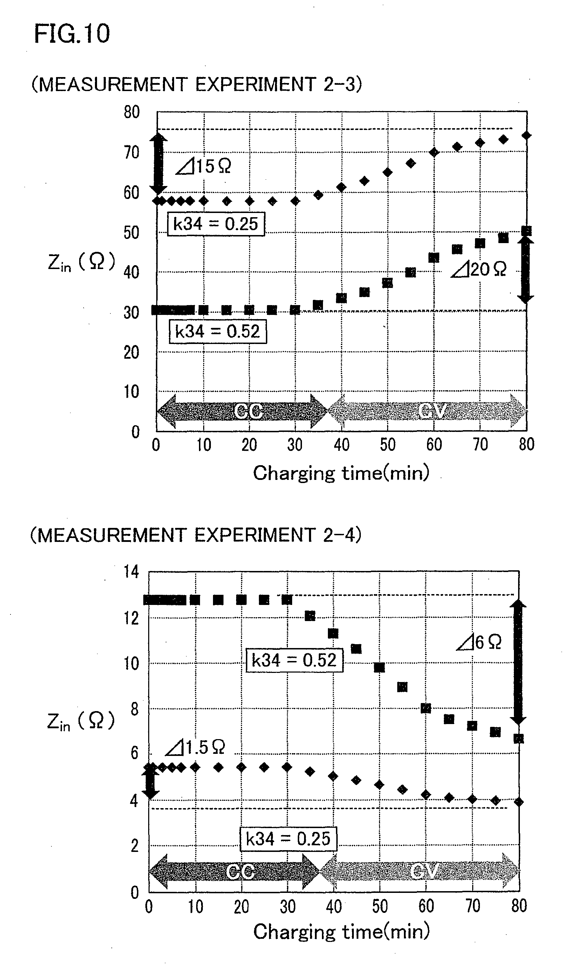

According to the measurement results of Measurement Experiment 2-3 shown in FIG. 10, in the case where the coupling coefficient $k_{34}$ was 0.25, an amount of change in the value of the input impedance Zin for a predetermined period of charging time in the constant voltage charging (CV) was approximately 15 $\Omega$. Meanwhile, in the case where the coupling coefficient $k_{34}$ was 0.52, an amount of change in the value of the input impedance $Z_{in}$ for the predetermined period of charging time in the constant voltage charging (CV) was approximately 20 $\Omega$. Thus, the load change characteristic is larger in the case where the coupling coefficient $k_{34}$ was 0.52 than in the case where the coupling coefficient $k_{34}$ was 0.25.

(Measurement Experiment 2-4)

The wireless power transmission apparatus 1 used in Measurement Experiments 2-4 is identical to that used in Measurement Experiment 2-1. In Measurement Experiment 2-4, after the wireless power transmission apparatus 1 was set to have the double-hump characteristic, the driving frequency of the AC power to the power-supplying module 2 was set to resonance frequency (f0) of the power-supplying resonator 22 and the power-receiving resonator 32. Then, while the coupling coefficients $k_{12}$ and $k_{23}$ were fixed to 0.46 and 0.20 respectively, the input impedance Zin at the time of charging (power-supplying to) the lithium ion secondary battery 9 was measured for the case where the coupling coefficient $k_{34}$ was set to 0.25 and for the case where the coupling coefficient $k_{34}$ was set to 0.52. In Measurement Experiment 2-4, in same way as in Measurement Experiment 2-2, the driving frequency of the AC power supplied to the power-supplying module 2 was set to the resonance frequency ($f_0$) of the power-supplying resonator 22 and the power-receiving resonator 32, to cause the value of the input impedance Zin after the transition from the constant current charging (CC) to the constant voltage charging (CV) to have the decreasing tendency.

According to the measurement results of Measurement Experiment 2-4 shown in FIG. 10, in the case where the coupling coefficient $k_{34}$ was 0.25, an amount of change in the value of the input impedance Zin for a predetermined period of charging time in the constant voltage charging (CV) was approximately 1.5 $\Omega$. Meanwhile, in the case where the coupling coefficient $k_{34}$ was 0.52, an amount of change in the value of the input impedance Zin for the predetermined period of charging time in the constant voltage charging (CV) was approximately 6 $\Omega$. Thus, the load change characteristic is larger in the case where the coupling coefficient $k_{34}$ was 0.52 than in the case where the coupling coefficient $k_{34}$ was 0.25.

(Measurement Experiment 2-5)

The values of $R_1$, $R_2$, $R_3$, and $R_4$ in the wireless power transmission apparatus 1 used in Measurement Experiments 2-5 were set to 0.7 $\Omega$, 0.7 $\Omega$, 2.5 $\Omega$, and 2.0 $\Omega$, respectively. Further, the values of $L_1$, $L_2$, $L_3$, and $L_4$ were set to 3.1 $\mu$H, 3.1 $\mu$H, 18.4 $\mu$H, and 12.5 $\mu$H, respectively. Further, the values of $C_1$, $C_2$, $C_3$, and $C_4$ were set to 8.7 nF, 8.7 nF, 1.5 nF, and 2.3 nF, respectively. The resonance frequency of the power-supplying resonator 22 and the power-receiving resonator 32 was 970 kHz.

In Measurement Experiment 2-5, after the wireless power transmission apparatus 1 was set to have the double-hump characteristic by the above arrangement, the driving frequency of the AC power to the power-supplying module 2 was set to the antiphase resonance mode (fH). Then, while the coupling coefficient $k_{23}$ was fixed to 0.20, the input impedance Zin and the input current Iin ($I_1$) at the time of charging (power-supplying to) the lithium ion secondary battery 9 were measured for the case where the coupling coefficient $k_{12}$ was set to 0.38 and the coupling coefficient $k_{34}$ was

set to 0.37 and for the case where the coupling coefficient $k_{12}$ was set to 0.46 and the coupling coefficient $k_{34}$ was set to 0.52. Also in Measurement Experiment 2-5, the input impedance $Z_{in}$ and the input current $I_{in}$ were measured as a function of the charging time (min.), under the condition that the input voltage Vin from the AC power source 6 to the wireless power transmission apparatus 1 was 5 V.

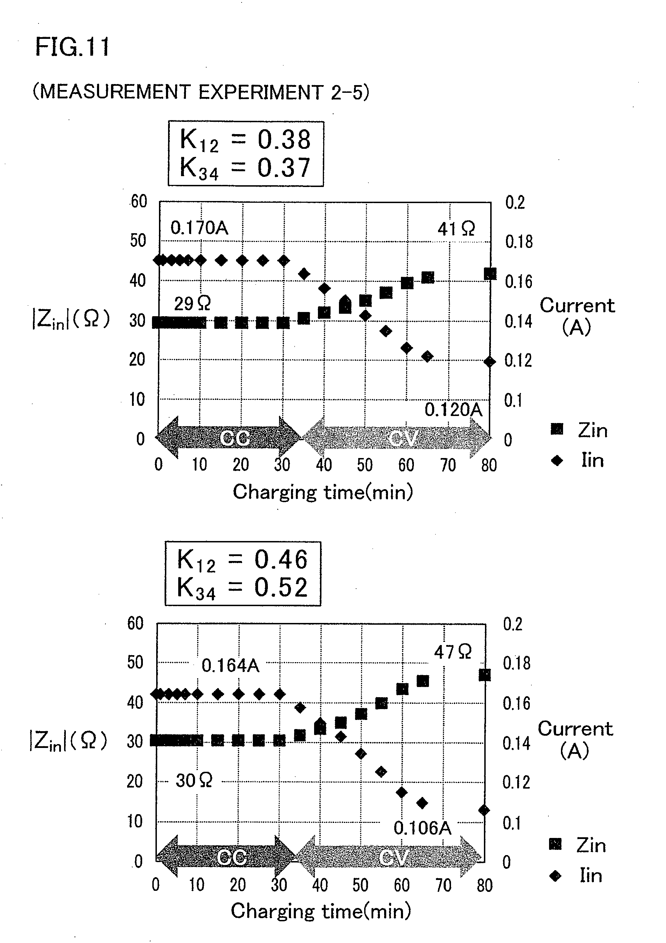

According to the measurement results of Measurement Experiment 2-5 shown in FIG. 11, in the case where the coupling coefficient $k_{12}$ was 0.38 and the coupling coefficient $k_{34}$ was 0.37, an amount of change in the value of the input impedance $Z_{in}$ for a predetermined period of charging time in the constant voltage charging (CV) was approximately 12 Ω (41 Q - 29 Ω). Meanwhile, in the case where the coupling coefficient $k_{12}$ was set to 0.46 and the coupling coefficient $k_{34}$ was set to 0.52, an amount of change in the value of the input impedance Zin for the predetermined period of charging time in the constant voltage charging (CV) was approximately 17 Ω (47 Q - - 30 Ω). Thus, the load change characteristic is larger in the case where the coupling coefficient $k_{12}$ was set to 0.46 and the coupling coefficient $k_{34}$ was set to 0.52 than in the case where the coupling coefficient $k_{12}$ was 0.38 and the coupling coefficient $k_{34}$ was 0.37.

Further, according to the measurement results for the input current $I_{in}$ in Measurement Experiment 2-5 shown in FIG. 11, in the case where the coupling coefficient $k_{12}$ was 0.38 and the coupling coefficient $k_{34}$ was 0.37, an amount of change in the value of the input current Iin to the wireless power transmission apparatus 1 for the predetermined period of charging time in the constant voltage charging was approximately 0.050 A (0.170A - 0.120 A). Meanwhile, in the case where the coupling coefficient $k_{12}$ was set to 0.46 and the coupling coefficient $k_{34}$ was set to 0.52, an amount of change in the value of the input current Iin to the wireless power transmission apparatus 1 for the predetermined period of charging time in the constant voltage charging was approximately 0.058 A (0.164 A - 0.106 A) . Thus, the amount of change in the input current Iin to the wireless power transmission apparatus 1 for the predetermined period of charging time in the constant voltage charging is larger in the case where the coupling coefficient $k_{12}$ was set to 0.46 and the coupling coefficient $k_{34}$ was set to 0.52 than in the case where the coupling coefficient $k_{12}$ was 0.38 and the coupling coefficient $k_{34}$ was 0.37.

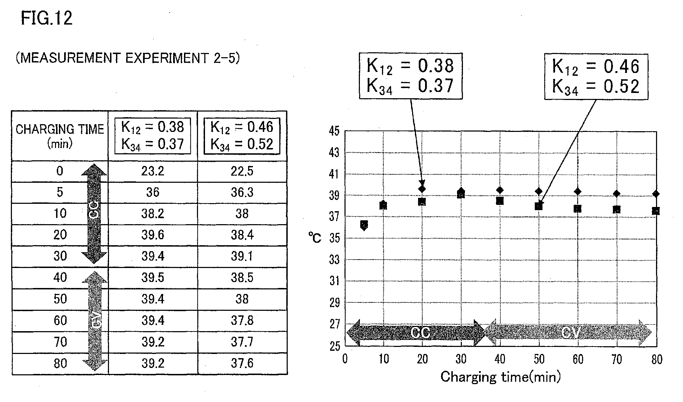

Further, in Measurement Experiment 2-5, the surface temperature of the power-supplying coil 21 in the constant current constant voltage charging was measured for the case where the coupling coefficient $k_{12}$ was 0.38 and the coupling coefficient $k_{34}$ was 0.37, and for the case where the coupling coefficient $k_{12}$ was set to 0.46 and the coupling coefficient $k_{34}$ was set to 0.52. The thus measured values and a graph in which the measured values are plotted are shown in FIG. 12.

According to the measurement results of the surface temperature of the power-supplying coil 21 in FIG. 12, in the case where the coupling coefficient $k_{12}$ was 0.38 and the coupling coefficient $k_{34}$ was 0.37, the surface temperature of the power-supplying coil 21 around the transition from the constant current charging (CC) to the constant voltage charging (CV) (a point between 30 min. and 40 min. of charging time) was approximately 39.4 degrees centigrade, and the surface temperature of the power-supplying coil 21 measured approximately 40 minutes after the transition to the constant voltage charging (CV) (corresponding to 80 min. of charging time) was approximately 39.2 degrees centigrade. That is, the surface temperature of the power-supplying coil 21 dropped merely by 0.2 degrees centigrade (39.4 - 39.2). Meanwhile, in the case where the coupling coefficient $k_{12}$ was 0.46 and the coupling coefficient $k_{34}$ was 0.52, the surface temperature of the power-supplying coil 21 around the transition from the constant current charging (CC) to the constant voltage charging (CV) (a point between 30 min. and 40 min. of charging time) was approximately 39.1 degrees centigrade, and the surface temperature of the power-supplying coil 21 measured approximately 40 minutes after the transition to the constant voltage charging (CV) (corresponding to 80 min. of charging time) was approximately 37.6 degrees centigrade. That is, the surface temperature of the power-supplying coil 21 dropped by 1.5 degrees centigrade (39.1 - 37.6).

Thus, by setting the coupling coefficients $k_{12}$ and $k_{34}$ to larger values, the load change characteristic is increased, which increases an amount of change in the value of the current Iin input to the wireless power transmission apparatus 1 for a predetermined charging time. This prevents excessive input of power after the transition from the constant current charging (CC) to the constant voltage charging (CV), thereby further preventing excessive heat generation in the wireless power transmission apparatus 1 (the power-supplying coil 21 in Measurement Experiment 2-5).

(Method for Adjusting Coupling coefficients)

The following describes a method for adjusting the coupling coefficients, which are parameters to adjust the above-described load change characteristic.

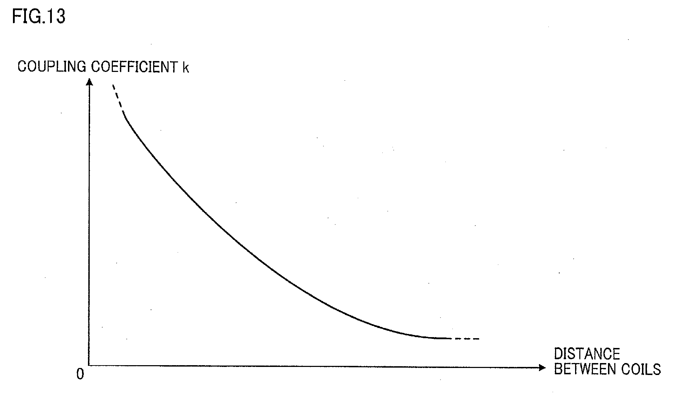

As shown in FIG. 13, in wireless power transmission, the relationship between a distance between coils and the corresponding coupling coefficient k is as follows: the coupling coefficient k increases with a decrease (reduction) in the distance between the coils. Now, let us apply the above to the wireless power transmission apparatus 1 of the present embodiment. With a decrease in the distance d12 between the power-supplying coil 21 and the power-supplying resonator 22, the coupling coefficient $k_{12}$ between the power-supplying coil 21 (coil $L_1$) and the power-supplying resonator 22 (coil $L_2$) increases; with a decrease in the distance d23 between the power-supplying resonator 22 and the power-receiving resonator 32, the coupling coefficient $k_{23}$ between the power-supplying resonator 22 (coil $L_2$) and the power-

receiving resonator 32 (coil $L_3$) increases; and with a decrease in the distance d34 between the power-receiving resonator 32 and the power-receiving coil 31, the coupling coefficient $k_{34}$ between the power-receiving resonator 32 (coil $L_3$) and the power-receiving coil 31 (coil $L_4$) increases. To the contrary, with an increase in the distance d12 between the power-supplying coil 21 and the power-supplying resonator 22, the coupling coefficient $k_{12}$ between the power-supplying coil 21 (coil $L_1$) and the power-supplying resonator 22 (coil $L_2$) decreases; with an increase in the distance d23 between the power-supplying resonator 22 and the power-receiving resonator 32, the coupling coefficient $k_{23}$ between the power-supplying resonator 22 (coil $L_2$) and the power-receiving resonator 32 (coil $L_3$) decreases; and with an increase in the distance d34 between the power-receiving resonator 32 and the power-receiving coil 31, the coupling coefficient $k_{34}$ between the power-receiving resonator 32 (coil $L_3$) and the power-receiving coil 31 (coil $L_4$) decreases.

Based on the above method for adjusting the coupling coefficients and Measurement Experiments 2-2 to 2-5 where the load change characteristic is adjusted by adjusting the coupling coefficients, the following is derived: while the distance d23 between the power-supplying resonator 22 and the power-receiving resonator 32 and the distance d34 between the power-receiving resonator 32 and the power-receiving coil 31 are fixed, it is possible to increase the value of the coupling coefficient $k_{12}$ between the power-supplying coil 21 and power-supplying resonator 22 by decreasing the distance d12 between the power-supplying coil 21 and power-supplying resonator 22, thereby to increase the load change characteristic. To the contrary, it is possible to decrease the value of the coupling coefficient $k_{12}$ between the power-supplying coil 21 and the power-supplying resonator 22 by increasing the distance d12 between the power-supplying coil 21 and the power-supplying resonator 22 , thereby to decrease the load change characteristic.

Further, while the distance d12 between the power-supplying coil 21 and power-supplying resonator 22 and the distance d23 between the power-supplying resonator 22 and the power-receiving resonator 32 are fixed, it is possible to increase the value of the coupling coefficient $k_{34}$ between the power-receiving resonator 32 and the power-receiving coil 31 by decreasing the distance d34 between the power-receiving resonator 32 and the power-receiving coil 31, thereby to increase the load change characteristic. To the contrary, it is possible to decrease the value of the coupling coefficient $k_{34}$ between the power-receiving resonator 32 and the power-receiving coil 31 by increasing the distance d34 between the power-receiving resonator 32 and the power-receiving coil 31, thereby to decrease the load change characteristic.

Further, while the distance d23 between the power-supplying resonator 22 and the power-receiving resonator 32 is fixed, it is possible to increase the values of the coupling coefficient $k_{12}$ between the power-supplying coil 21 and power-supplying resonator 22 and the coupling coefficient $k_{34}$ between the power-receiving resonator 32 and the power-receiving coil 31 by respectively decreasing the distance d12 between the power-supplying coil 21 and the power-supplying resonator 22 and the distance d34 between the power-receiving resonator 32 and the power-receiving coil 31, thereby to increase the load change characteristic. To the contrary, it is possible to decrease the values of the coupling coefficient $k_{12}$ between the power-supplying coil 21 and the power-supplying resonator 22 and the coupling coefficient $k_{34}$ between the power-receiving resonator 32 and the power-receiving coil 31 by respectively increasing the distance d12 between the power-supplying coil 21 and the power-supplying resonator 22 and the distance d34 between the power-receiving resonator 32 and the power-receiving coil 31, thereby to decrease the load change characteristic.

With the above method, in the case where the lithium ion secondary battery 9 rechargeable using a constant current/constant voltage charging system is charged using the wireless power transmission apparatus 1 configured to supply power by means of a resonance phenomenon, it is possible to adjust the load change characteristic, which is represented by an amount of change in the value of the input impedance $Z_{in}$ of the wireless power transmission apparatus 1 for a predetermined period of charging time after the transition from the constant current charging (CC) to the constant voltage charging (CV), by changing at least one of the coupling coefficients which are the coupling coefficient $k_{12}$ between the power-supplying coil 21 and the power-supplying resonator 22, the coupling coefficient $k_{23}$ between the power-supplying resonator 22 and the power-receiving resonator 32, and the coupling coefficient $k_{34}$ between the power-receiving resonator 32 and the power-receiving coil 31. As the load change characteristic is increased in this way, an amount of change in the value of the input impedance $Z_{in}$ of the wireless power transmission apparatus 1 for a predetermined period of charging time after the transition from the constant current charging (CC) to the constant voltage charging (CV) increases, which increases an amount of change in the value of the current Iin input to the wireless power transmission apparatus 1 for a predetermined period of charging time. Such an increase in the amount of change in the value of the current Iin input to the wireless power transmission apparatus 1 prevents excessive input of power after the transition from the constant current charging (CC) to the constant voltage charging (CV), and thereby it is possible to prevent excessive heat generation in the wireless power transmission apparatus 1 (the power-supplying coil 21, the power-supplying resonator 22, the power-receiving resonator 32, and the power-receiving coil 31).

To the contrary, as the load change characteristic is decreased, an amount of change in the value of the input impedance Zin of the wireless power transmission apparatus 1 for a predetermined period of charging time after the transition from the constant current charging (CC) to the constant voltage charging (CV) decreases, which decreases an amount of change in the value of the current Iin input to the wireless power transmission apparatus 1 for a predetermined period of charging time. Such a decrease in the amount of change in the value of the current Iin input to the wireless power transmission apparatus 1 suppresses rapid variation, for a short time, in temperature of the wireless power transmission apparatus 1 (the power-supplying coil 21, the power-supplying resonator 22, the power-receiving resonator 32, and the power-receiving coil 31) after the transition from the constant current charging (CC) to the constant voltage charging (CV).

Furthermore, with the above method, it is possible to increase the load change characteristic by increasing the coupling coefficient $k_{12}$ between the power-supplying coil 21 and the power-supplying resonator 22.

Furthermore, with the above method, it is possible to increase the load change characteristic by increasing the coupling coefficient $k_{34}$ between the power-receiving resonator 32 and the power-receiving coil 31.

Furthermore, with the above method, it is possible to increase the load change characteristic by increasing the coupling coefficient $k_{12}$ between the power-supplying coil 21 and the power-supplying resonator 22 and the coupling coefficient $k_{34}$ between the power-receiving resonator 32 and the power-receiving coil 31.

With the above method, it is possible to change the value of the coupling coefficient $k_{12}$ between the power-supplying coil 21 and the power-supplying resonator 22 by changing the distance d12 between the power-supplying coil 21 and the power-supplying resonator 22 ; it is possible to change the value of the coupling coefficient $k_{23}$ between the power-supplying resonator 22 and the power-receiving resonator 32 by changing the distance d23 between the power-supplying resonator 22 and the power-receiving resonator 32; and it is possible to change the value of the $k_{34}$ between the power-receiving resonator 32 and the power-receiving coil 31 by changing the distance d34 between the power-receiving resonator 32 and the power-receiving coil 31. Thus, by a simple operation of physically changing the distance d12 between the power-supplying coil 21 and the power-supplying resonator 22 ; the distance d23 between the power-supplying resonator 22 and the power-receiving resonator 32; and the distance d34 between the power-receiving resonator 32 and the power-receiving coil 31, it is possible to change the respective coupling coefficients between the corresponding coils. That is, it is possible to adjust the load change characteristic by the simple operation of physically changing at least one of the distances between coils.

(Manufacturing Method)

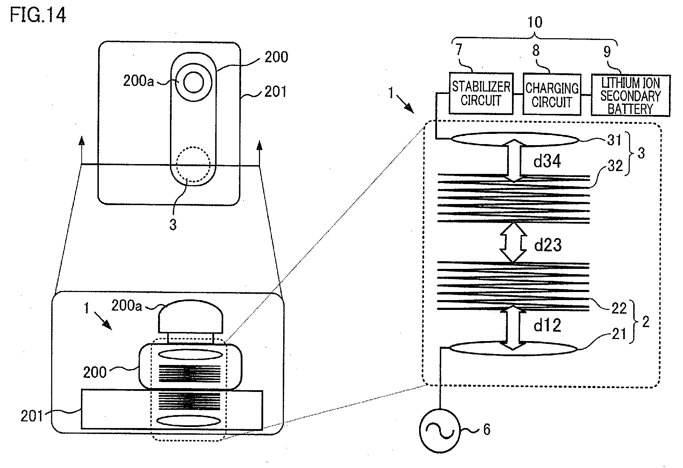

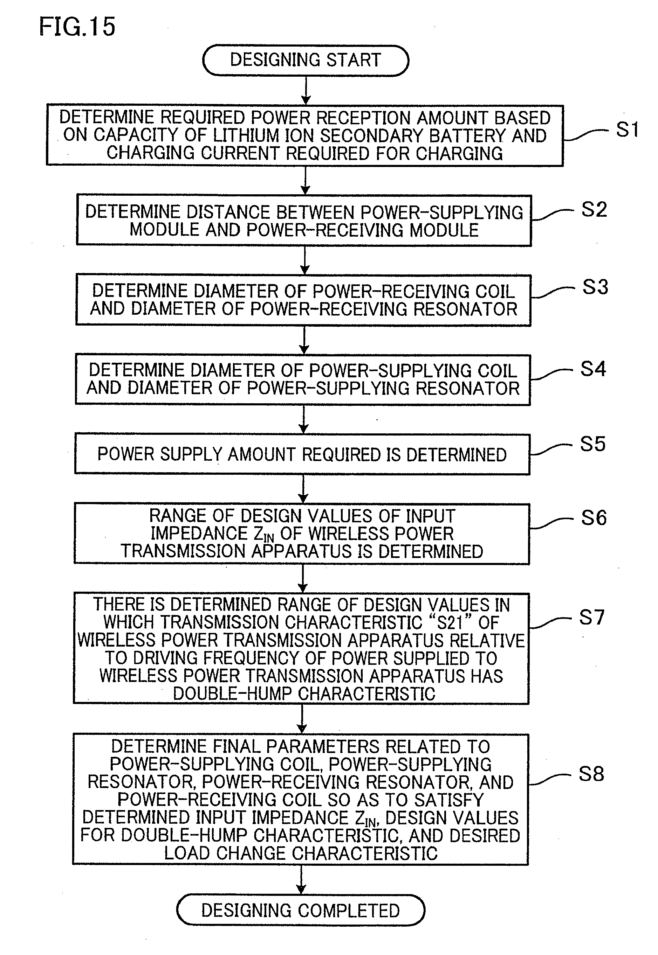

Next, the following describes with reference to FIG. 14 and FIG. 15 a design method (design process) which is a part of the manufacturing process of the wireless power transmission apparatus 1. In the following description, a wireless headset 200 having an earphone speaker unit 200a, and a charger 201 are described as an example of a portable device having the wireless power transmission apparatus 1 (see FIG. 14).

The wireless power transmission apparatus 1 to be designed in this design method is mounted in the wireless headset 200 and the charger 201 shown in FIG. 14, in the form of a power-receiving module 3 (the power-receiving coil 31 and the power-receiving resonator 32) and a power-supplying module 2 (the power-supplying coil 21 and the power-supplying resonator 22), respectively. For the sake of convenience, FIG. 14 illustrates the stabilizer circuit 7, the charging circuit 8, and the lithium ion secondary battery 9 outside the power-receiving module 3; however, these are actually disposed on the inner circumference side of the power-receiving coil 31 and the power-receiving resonator 32, which is a solenoid coil. That is, the wireless headset 200 includes the power-receiving module 3, the stabilizer circuit 7, the charging circuit 8, and the lithium ion secondary battery 9, and the charger 201 includes the power-supplying module 2. While in use, the power-supplying coil 21 of the power-supplying module 2 is connected to the AC power source 6.

(Design Method)

First, as shown in FIG. 15, a power reception amount in the power-receiving module 3 is determined based on the capacity of the lithium ion secondary battery 9, and the charging current required for charging the lithium ion secondary battery 9 (S1).

Next, the distance between the power-supplying module 2 and the power-receiving module 3 is determined (S2) . The distance is the distance d23 between the power-supplying resonator 22 and the power-receiving resonator 32 in the situation where the wireless headset 200 having therein the power-receiving module 3 is placed on the charger 201 having therein the power-supplying module 2, i.e., during the charging state. To be more specific, the distance d23 between the power-supplying resonator 22 and the power-receiving resonator 32 is determined, taking into account the shapes and the structures of the wireless headset 200 and the charger 201.

Further, based on the shape and the structure of the wireless headset 200, the coil diameters of the power-receiving coil 31 and the coil of the power-receiving resonator 32 which are in the power-receiving module 3 are determined (S3).

Further, based on the shape and the structure of the charger 201, the coil diameters of the power-supplying coil 21 and the coil of the power-supplying resonator 22 which are in the power-supplying module 2 are determined (S4).

Through the steps of S2 to S4, the coupling coefficient $K_{23}$ between the power-supplying resonator 22 (coil $L_2$) and the power-receiving resonator 32 (coil $L_3$) of the wireless power transmission apparatus 1; and the power transmission efficiency are determined.

Based on the power reception amount in the power-receiving module 3 determined in S1 and on the power transmission efficiency determined through S2 to S4, the minimum power supply amount required for the power-supplying module 2 is determined (S5).

Then, a range of design values of the input impedance Zin in the wireless power transmission apparatus 1 is determined, taking into account the power reception amount in the power-receiving module 3 , the power transmission efficiency, and the minimum power supply amount required for the power-supplying module 2 (S6).

Further, there is determined a range of design values in which the transmission characteristic "S21" of the wireless power transmission apparatus 1 relative to the driving frequency of power supplied to the wireless power transmission apparatus 1 has the double-hump characteristic (S7).

Then, final parameters related to the power-supplying coil 21, the power-supplying resonator 22, the power-receiving resonator 32, and the power-receiving coil 31 are determined so as to satisfy: the design values of the input impedance $Z_{in}$ determined in S6; the design values for the double-hump characteristic determined in S7; and a desired load change characteristic (S8). The parameters related to the power-supplying coil 21, the power-supplying resonator 22, the power-receiving resonator 32, and the power-receiving coil 31 include: the resistance values, inductances, and capacities of capacitors in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, and the $R_4$, $L_4$, and $C_4$ of the RLC circuit of the power-receiving coil 31; the coupling coefficients $K_{12}$, $K_{23}$, and $K_{34}$; and the distance d12 between the power-supplying coil 21 and the power-supplying resonator 22, and the distance d34 between the power-receiving resonator 32 and the power-receiving coil 31.

The above-described manufacturing method of the wireless power transmission apparatus 1 including the above design method enables manufacturing of a wireless power transmission apparatus 1 that allows control of heat generation in the wireless power transmission apparatus 1 by adjusting the value of at least one coupling coefficient between coils each included in the power-supplying module 2 or the power-receiving module 3. In other words, it is possible to manufacture the wireless power transmission apparatus 1 capable of controlling heat generation therein without a need of an additional component in the wireless power transmission apparatus 1.

(Other Embodiments)

Although the above description of the manufacturing method deals with the wireless headset 200 as an example, the method is applicable to any devices having a secondary battery: e. g. , tablet PCs, digital cameras, mobile phones, earphone-type music players, hearing aids, and sound collectors.

Although the above description deals with the wireless power transmission apparatus 1 configured to perform power transmission by means of magnetic coupling using a resonance phenomenon (magnetic field resonant state) between resonators (coils) provided to the power-supplying module 2 and the power-receiving module 3, the present invention is applicable to a wireless power transmission apparatus 1 configured to perform power transmission by using electromagnetic induction between coils.

Further, although the above description assumes the wireless power transmission apparatus 1 is mounted in a portable electronic device, the use of such an apparatus is not limited to small devices. For example, with a modification to the specifications according to the required power amount, the wireless power transmission apparatus 1 is mountable to a relatively large system such as a wireless charging system for an electronic vehicle (EV), or to an even smaller device such as a wireless endoscope for medical use.

Although the above descriptions have been provided with regard to the characteristic parts so as to understand the present invention more easily, the invention is not limited to the embodiments and the examples as described above and can be applied to the other embodiments and examples, and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

[Reference Signs List]

    1: Wireless Power Transmission Apparatus
    2: Power-Supplying Module

3: Power-Receiving Module
6: AC power source
7: Stabilizer Circuit
8: Charging Circuit
9: Lithium Ion Secondary Battery
10: Power-Supplied Device
21: Power-Supplying Coil
22: Power-Supplying Resonator
31: Power-Receiving Coil
32: Power-Receiving Resonator
200: Wireless Headset
201: Charger

**Claims**

1. A thermal control method for a wireless power transmission apparatus configured to supply power, by changing a magnetic field, from a power-supplying module to a power-receiving module connected to a power-supplied device including a secondary battery rechargeable using a constant current/constant voltage charging system, the method comprising
adjusting a load change characteristic, which is represented by an amount of change in input impedance value of the wireless power transmission apparatus for a predetermined period of charging time in constant voltage charging, by adjusting a value of a coupling coefficient between coils each included in the power-supplying module or the power-receiving module.

2. The thermal control method according to claim 1, wherein the wireless power transmission apparatus is configured to supply power, by means of resonance phenomenon, from the power-supplying module having at least a power-supplying coil and a power-supplying resonator to the power-receiving module having at least a power-receiving resonator and a power-receiving coil, the power-receiving module being connected to a power-supplied device including a secondary battery rechargeable using a constant current/constant voltage charging system, and
the load change characteristic, which is represented by an amount of change in input impedance value of the wireless power transmission apparatus for a predetermined period of charging time in constant voltage charging, is adjusted by adjusting at least one of coupling coefficients which are a coupling coefficient between the power-supplying coil and the power-supplying resonator, a coupling coefficient between the power-supplying resonator and the power-receiving resonator, and a coupling coefficient between the power-receiving resonator and the power-receiving coil.

3. The thermal control method according to claim 2, wherein the load change characteristic is increased by increasing the coupling coefficient between the power-supplying coil and the power-supplying resonator.

4. The thermal control method according to claim 2, wherein the load change characteristic is increased by increasing the coupling coefficient between the power-receiving resonator and the power-receiving coil.

5. The thermal control method according to claim 2, wherein the load change characteristic is increased by increasing the coupling coefficient between the power-supplying coil and the power-supplying resonator and the coupling coefficient between the power-receiving resonator and the power-receiving coil.

6. The thermal control method according to any one of claims 2 to 5, wherein the value of the coupling coefficient between the power-supplying coil and the power-supplying resonator is adjusted by changing a distance between the power-supplying coil and the power-supplying resonator, the value of the coupling coefficient between the power-supplying resonator and the power-receiving resonator is adjusted by changing a distance between the power-supplying resonator and the power-receiving resonator, and the value of the coupling coefficient between the power-receiving resonator and the power-receiving coil is adjusted by changing a distance between the power-receiving resonator and the power-receiving coil.

7. The thermal control method according to any one of claims 1 to 6, further comprising
setting variable parameters configuring the power-supplying module and the power-receiving module so that values of a transmission characteristic relative to a driving frequency of power supplied to the power-supplying module have a double-hump characteristic having a peak in a lower driving frequency band which is lower than a resonance frequency of the power-supplying module and the power-receiving module, and a peak in a higher driving frequency band which is higher than the resonance frequency, thereby
enabling control of a variation tendency of input impedance values of the wireless power transmission apparatus in the constant voltage charging, by adjusting the driving frequency.

8. The thermal control method according to claim 7, wherein the driving frequency of the power supplied to the power-supplying module is set in a band corresponding to a peak value of the transmission characteristic appearing in the lower driving frequency band lower than the resonance frequency of the power-supplying module and the power-receiving module, or in a band corresponding to a peak value of the transmission characteristic appearing in the higher driving frequency band higher than the resonance frequency of the power-supplying module and the power-receiving module, thereby making adjustment so that the input impedance values of the wireless power transmission apparatus in the constant voltage charging show an increasing tendency.

9. The thermal control method according to claim 7, wherein the driving frequency of the power supplied to the power-supplying module is set in a band corresponding to a valley between peak values of the transmission characteristic respectively appearing in the lower drive frequency band and the higher frequency band which are respectively lower and higher than the resonance frequency of the power-supplying module and the power-receiving module, thereby making adjustment so that the input impedance values of the wireless power transmission apparatus in the constant voltage charging show a maintaining tendency or a decreasing tendency.

10. A wireless power transmission apparatus adjusted by the thermal control method recited in any one of claims 1 to 9.

11. A manufacturing method for a wireless power transmission apparatus configured to supply power, by changing a magnetic field, from a power-supplying module to a power-receiving module connected to a power-supplied device including a secondary battery rechargeable using a constant current/constant voltage charging system, the method comprising
a process of adjusting a load change characteristic, which is represented by an amount of change in input impedance value of the wireless power transmission apparatus for a predetermined period of charging time in constant voltage charging, by adjusting a value of a coupling coefficient between coils each included in the power-supplying module or the power-receiving module.

# FIG.1

$$I_{in} = V_{in} / Z_{in}$$

FIG.2

# FIG.3

FIG.4

S21[dB]

f [Hz]

fL        f0        fH

FIG.5

|Zin|[Ω]

f [Hz]

fL        f0        fH

# FIG.6

(MEASUREMENT EXPERIMENT 1-1)
INPHASE RESONANCE MODE :fL=870kHz

FIG.7

(MEASUREMENT EXPERIMENT 1-2)
ANTIPHASE RESONANCE MODE :fH=1070kHz

FIG.8

(MEASUREMENT EXPERIMENT 1-3)
RESONANCE FREQUENCY :f0=970kHz

## FIG.9

(MEASUREMENT EXPERIMENT 2-1)

(MEASUREMENT EXPERIMENT 2-2)

# FIG.10

(MEASUREMENT EXPERIMENT 2-3)

(MEASUREMENT EXPERIMENT 2-4)

## FIG.11

(MEASUREMENT EXPERIMENT 2-5)

## FIG.12

(MEASUREMENT EXPERIMENT 2-5)

| CHARGING TIME (min) | | $K_{12} = 0.38$ $K_{34} = 0.37$ | $K_{12} = 0.46$ $K_{34} = 0.52$ |
|---|---|---|---|
| 0 | CC | 23.2 | 22.5 |
| 5 | | 36 | 36.3 |
| 10 | | 38.2 | 38 |
| 20 | | 39.6 | 38.4 |
| 30 | | 39.4 | 39.1 |
| 40 | CV | 39.5 | 38.5 |
| 50 | | 39.4 | 38 |
| 60 | | 39.4 | 37.8 |
| 70 | | 39.2 | 37.7 |
| 80 | | 39.2 | 37.6 |

$K_{12} = 0.38$
$K_{34} = 0.37$

$K_{12} = 0.46$
$K_{34} = 0.52$

°C — Charging time(min)

33

FIG.13

COUPLING COEFFICIENT k

0

DISTANCE
BETWEEN COILS

FIG.14

## FIG.15

```
        ( DESIGNING START )
                 │
                 ▼
┌─────────────────────────────────────────────┐
│ DETERMINE REQUIRED POWER RECEPTION AMOUNT    │
│ BASED ON CAPACITY OF LITHIUM ION SECONDARY   │──── S1
│ BATTERY AND CHARGING CURRENT REQUIRED FOR    │
│ CHARGING                                     │
└─────────────────────────────────────────────┘
                 │
                 ▼
┌─────────────────────────────────────────────┐
│ DETERMINE DISTANCE BETWEEN POWER-SUPPLYING   │──── S2
│ MODULE AND POWER-RECEIVING MODULE            │
└─────────────────────────────────────────────┘
                 │
                 ▼
┌─────────────────────────────────────────────┐
│ DETERMINE DIAMETER OF POWER-RECEIVING COIL   │──── S3
│ AND DIAMETER OF POWER-RECEIVING RESONATOR    │
└─────────────────────────────────────────────┘
                 │
                 ▼
┌─────────────────────────────────────────────┐
│ DETERMINE DIAMETER OF POWER-SUPPLYING COIL   │──── S4
│ AND DIAMETER OF POWER-SUPPLYING RESONATOR    │
└─────────────────────────────────────────────┘
                 │
                 ▼
┌─────────────────────────────────────────────┐
│ POWER SUPPLY AMOUNT REQUIRED IS DETERMINED   │──── S5
└─────────────────────────────────────────────┘
                 │
                 ▼
┌─────────────────────────────────────────────┐
│ RANGE OF DESIGN VALUES OF INPUT              │
│ IMPEDANCE $Z_{IN}$ OF WIRELESS POWER          │──── S6
│ TRANSMISSION APPARATUS IS DETERMINED         │
└─────────────────────────────────────────────┘
                 │
                 ▼
┌─────────────────────────────────────────────┐
│ THERE IS DETERMINED RANGE OF DESIGN VALUES   │
│ IN WHICH TRANSMISSION CHARACTERISTIC "S21"   │
│ OF WIRELESS POWER TRANSMISSION APPARATUS     │──── S7
│ RELATIVE TO DRIVING FREQUENCY OF POWER       │
│ SUPPLIED TO WIRELESS POWER TRANSMISSION      │
│ APPARATUS HAS DOUBLE-HUMP CHARACTERISTIC     │
└─────────────────────────────────────────────┘
                 │
                 ▼
┌─────────────────────────────────────────────┐
│ DETERMINE FINAL PARAMETERS RELATED TO        │
│ POWER-SUPPLYING COIL, POWER-SUPPLYING        │
│ RESONATOR, POWER-RECEIVING RESONATOR, AND    │
│ POWER-RECEIVING COIL SO AS TO SATISFY        │──── S8
│ DETERMINED INPUT IMPEDANCE $Z_{IN}$, DESIGN   │
│ VALUES FOR DOUBLE-HUMP CHARACTERISTIC, AND   │
│ DESIRED LOAD CHANGE CHARACTERISTIC           │
└─────────────────────────────────────────────┘
                 │
                 ▼
      ( DESIGNING COMPLETED )
```

## INTERNATIONAL SEARCH REPORT

| | International application No. |
|---|---|
| | PCT/JP2014/052067 |

| A. CLASSIFICATION OF SUBJECT MATTER |
|---|
| *H02J17/00*(2006.01)i, *H01F38/14*(2006.01)i, *H02J7/00*(2006.01)i |

According to International Patent Classification (IPC) or to both national classification and IPC

| B. FIELDS SEARCHED |
|---|
| Minimum documentation searched (classification system followed by classification symbols) |
| H02J17/00, H01F38/14, H02J7/00 |

| Documentation searched other than minimum documentation to the extent that such documents are included in the fields searched |
|---|
| Jitsuyo Shinan Koho 1922–1996 Jitsuyo Shinan Toroku Koho 1996–2014 |
| Kokai Jitsuyo Shinan Koho 1971–2014 Toroku Jitsuyo Shinan Koho 1994–2014 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2012-147659 A (Semiconductor Energy Laboratory Co., Ltd.), 02 August 2012 (02.08.2012), paragraphs [0045] to [0066]; fig. 6 to 10, 13 & US 2012/0161537 A1 & CN 102570627 A & KR 10-2012-0073094 A | 1-11 |
| Y | JP 2012-105503 A (Nissan Motor Co., Ltd.), 31 May 2012 (31.05.2012), paragraphs [0001] to [0004], [0023] to [0032]; fig. 5a, 5b (Family: none) | 1-11 |

[X] Further documents are listed in the continuation of Box C.     [ ] See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 25 March, 2014 (25.03.14) | 01 April, 2014 (01.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

37

**INTERNATIONAL SEARCH REPORT**

| International application No. |
| --- |
| PCT/JP2014/052067 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2010-503368 A (Powercast Corp.), 28 January 2010 (28.01.2010), paragraph [0073] & US 2008/0054638 A1 & EP 2054993 A & WO 2008/030379 A2 & CA 2662151 A & AU 2007293383 A & MX 2009002213 A | 1-11 |
| Y | JP 2002-315209 A (Terumo Corp.), 25 October 2002 (25.10.2002), paragraph [0022] (Family: none) | 1-11 |
| Y | WO 2012/086625 A1 (Yazaki Corp.), 28 June 2012 (28.06.2012), paragraphs [0007] to [0012], [0041] to [0046]; fig. 3 to 6, 30, 31 & JP 2012-135108 A & JP 2012-135109 A & CN 103270671 A | 7-9 |

Form PCT/ISA/210 (continuation of second sheet) (July 2009)

**EP 2 993 677 A1**

REFERENCES CITED IN THE DESCRIPTION

**Patent documents cited in the description**

- JP 4624768 B

- JP 2010239769 A